# EUROPEAN PATENT SPECIFICATION

(11) **EP 4 342 845 B1**
(45) Date of publication and mention of the grant of the patent: **02.04.2025**
(21) Application number: 22197678.0
(22) Date of filing: 26.09.2022
(51) Int. Cl.: C01B 3/48, C01B 3/52, B01D 53/14

(54) **PROCESS AND PLANT FOR PRODUCING HYDROGEN-RICH SYNTHESIS GAS STREAM FROM A CARBON-CONTAINING INPUT GAS STREAM**
VERFAHREN UND ANLAGE ZUR ERZEUGUNG EINES WASSERSTOFFREICHEN SYNTHESEGASSTROMS AUS EINEM KOHLENSTOFFHALTIGEN EINSATZGASSTROM
PROCÉDÉ ET INSTALLATION POUR LA PRODUCTION D'UN FLUX DE GAZ DE SYNTHÈSE RICHE EN HYDROGÈNE À PARTIR D'UN FLUX DE GAZ D'ENTRÉE CONTENANT DU CARBONE

(43) Date of publication of application: 27.03.2024
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: SCHMIDT, Sophia, 60439 Frankfurt am Main (DE)
(74) Representative: Air Liquide

(56) References cited:
- WO-A1-2019/120616
- US-A1- 2021 402 347
- US-A1- 2022 144 634

## Description

### TECHNICAL FIELD

The invention relates generally to synthesis gas production; more specifically, the invention relates to a process and a plant for producing a hydrogen-rich synthesis gas stream from a carbon-containing input gas stream having reduced carbon dioxide emission from reforming by using hydrogen fueling. The process and plant advantageously use less energy for purification of hydrogen in a purification unit.

### BACKGROUND

Carbon gases released during current methods of ammonia production contribute to global carbon emission which is the biggest threat to global warming. Hence it is required to minimize the carbon gas emissions from ammonia production plants. It is also important that the reduction of emissions should not increase the costs of production of ammonia. EP3583067 B1 presents a setup, in which the hydrogen coming from a gas cleaning unit is split into two streams: One stream is sent to further purification prior to ammonia synthesis, and the other stream is sent to a reforming unit for fueling. The effect of the usage of hydrogen is to decrease the carbon emissions in the flue gas, as less natural gas is required for firing, which is combusted to carbon dioxide (CO₂). The obvious disadvantage of the prior art is that a large amount (e.g., ~33% of the CO₂-depleted hydrogen) is used for fueling. This hydrogen has to be processed in the gas cleaning unit and creates a high amount of utility consumption, especially a high amount of energy consumption, which should be prevented. The amount of hydrogen used for fueling depends on a reforming technology as well as on the required carbon footprint or avoidance and can vary between a couple of percent of the produced hydrogen to the 33% of the example from the mentioned prior art.

Therefore, there is a need to address the aforementioned technical drawbacks in existing known technologies to decrease the carbon emissions in hydrogen production via a natural gas reforming but, at the same time, reduce the energy consumption. US 2022/0144634 A1 discloses such known process for producing hydrogen via natural gas steam reforming and for separating carbon dioxide from synthesis gas.

### SUMMARY

The invention seeks to provide an improved approach to decrease carbon emissions from reforming by using hydrogen fueling without using high energy for purification of hydrogen in a gas cleaning unit or a carbon dioxide absorption column. An aim of the invention is to provide a solution that overcomes, at least partially, the problems encountered in prior art and provide a process and a plant for producing a hydrogen-rich synthesis gas stream from a carbon-containing input gas stream having reduced carbon dioxide emission by using a portion of synthesis gas stream from the carbon dioxide absorption column as a fuel gas in a synthesis gas production stage. The portion of synthesis gas stream is withdrawn between a fine scrubbing and a main scrubbing section of the carbon dioxide absorption column and used as hydrogen fuel within the reforming section, thereby solvent requirement for the fine scrubbing section is reduced which in turn leads to savings in utility consumption and capital expenditures. Further, the invention provides a hydrogen fueling concept for blue ammonia production where a final carbon dioxide depleted stream after a purifying, conditioning or processing step is sent along with nitrogen to an ammonia synthesis unit.

The object of the invention is achieved by the solutions provided in the enclosed independent claims. Advantageous implementations of the invention are further defined in the enclosed dependent claims.

According to a first aspect, the invention provides a process for producing a hydrogen-rich synthesis gas stream from a carbon-containing input gas stream having reduced carbon dioxide emission, comprising the steps of:
(a) providing a sulfur-free or desulfurized, carbon-containing input gas stream;
(b) introducing the input gas stream into at least one synthesis gas production stage, selected from a group comprising:
   steam reforming stage, gas-heated reforming stage (GHR), autothermal reforming stage (ATR), catalytic partial oxidation stage (CPOX), noncatalytic partial oxidation stage (POX);
(c) converting the carbon-containing input gas stream introduced into the at least one synthesis gas production stage under synthesis gas production conditions and discharging a raw synthesis gas stream containing hydrogen, carbon monoxide and carbon dioxide from the at least one synthesis gas production stage;
(d) introducing the raw synthesis gas stream into a first cooling apparatus, cooling the raw synthesis gas stream in the first cooling apparatus, discharging the cooled raw synthesis gas stream from the first cooling apparatus;
(e) introducing the cooled raw synthesis gas stream into a CO conversion plant comprising at least one CO conversion stage, converting the cooled raw synthesis gas stream introduced into the CO conversion plant under CO conversion conditions to afford a converted synthesis gas stream, discharging the converted synthesis gas stream which is enriched in hydrogen and carbon dioxide and depleted in carbon monoxide relative to the raw synthesis gas stream;
(f) introducing the converted synthesis gas stream into a second cooling apparatus, cooling the converted the synthesis gas stream in the second cooling apparatus, discharging the cooled converted synthesis gas stream from the second cooling apparatus;
(g) introducing the cooled converted synthesis gas stream into a carbon dioxide absorption column which operates according to the principle of a gas scrubbing having a physical or chemical scrubbing medium, wherein the carbon dioxide absorption column comprises:
   (g1) at least one mass transfer zone, in the form of a structured packing and/or a random packing and/or a tray column,
   (g2) an inlet for the cooled converted synthesis gas stream,
   (g3) an outlet for a first synthesis gas stream depleted in carbon dioxide at the upper end of the absorption column,
   (g4) an outlet for a scrubbing medium stream enriched in carbon dioxide at the lower end of the absorption column,
   (g5) an inlet for a fine scrubbing medium stream in the upper region of the absorption column, wherein the fine scrubbing medium stream is obtained by hot regeneration of at least a portion of the scrubbing medium stream enriched in carbon dioxide,
   (g6) an inlet for a main scrubbing medium stream arranged in the upper region of the absorption column but below the inlet for the fine scrubbing medium stream, wherein the main scrubbing medium stream is obtained by flash regeneration of at least a portion of the scrubbing medium stream enriched in carbon dioxide to obtain at least one flash gas stream whose carbon dioxide concentration is higher than that in the first synthesis gas stream depleted in carbon dioxide;
(h) contacting the cooled converted synthesis gas stream in the carbon dioxide absorption column with the main scrubbing medium stream and with the fine scrubbing medium stream, discharging the first synthesis gas stream depleted in carbon dioxide as a hydrogen-rich synthesis gas stream at the upper end of the absorption column;
(i) optionally supplying the hydrogen-rich synthesis gas stream to at least one further purifying, conditioning or processing step;
   **characterized in that**
(j) the carbon dioxide absorption column comprises a further outlet which is arranged below the inlet for the fine scrubbing medium stream as a side draw and by means of which a second synthesis gas stream depleted in carbon dioxide, whose carbon dioxide concentration is higher than that in the first synthesis gas stream depleted in carbon dioxide, is discharged;
(k) wherein at least a portion of the second synthesis gas stream depleted in carbon dioxide is utilized as a portion of a fuel gas or process gas in the synthesis gas production stage or forms the fuel gas or process gas in the synthesis gas production stage.

The process for producing the hydrogen-rich synthesis gas stream from the carbon-containing input gas stream according to the invention is of advantage in that the process decreases the carbon dioxide emissions from reforming by using hydrogen fueling without consuming a high amount of energy for the purification of the hydrogen in the gas cleaning unit. The process includes withdrawing the hydrogen rich fuel gas stream between the fine scrubbing and the main scrubbing section of the carbon dioxide absorption column and using as hydrogen fuel within the reforming section through which the solvent requirement for the fine scrubbing section is reduced which in turn enables savings in electrical and low-pressure steam consumption, and enables decreasing diameters of both carbon dioxide absorption column and regenerator slightly. The process of the invention includes flash regeneration of the scrubbing media stream from the carbon dioxide absorption column to obtain the main scrubbing medium stream, where the regeneration is done by flashing (pressure decrease) and consumes only a minimum energy for re-compression of the solvent. During flashing, CO₂ is removed from the solvent and the so-called auto-refrigeration effect causes a decrease in the temperature of the system, which is beneficial for absorption efficiency. The process of the invention includes hot regeneration of the scrubbing media stream from the carbon dioxide absorption column to obtain the fine scrubbing medium stream. In the fine scrubbing section, at least a part of the cooled methanol from the hot regeneration unit is used for absorption. The regeneration of this type of solvent requires more energy and additional equipment than the solvent regenerated by flashing only. Therefore, reducing this type of solvent leads to savings in utility consumption and capital expenditures.

According to a second aspect, the invention provides a plant for producing a hydrogen-rich synthesis gas stream from a carbon-containing input gas stream having reduced carbon dioxide emission, comprising the following assemblies and constituents fluidically connected to one another:
(a) means for providing a sulfur-free or desulfurized, carbon-containing input gas stream;
(b) at least one synthesis gas production stage selected from a group comprising:
   steam reforming stage, gas-heated reforming stage (GHR), autothermal reforming stage (ATR), catalytic partial oxidation stage (CPOX), noncatalytic partial oxidation stage (POX);
   means for introducing the input gas stream into the at least one synthesis gas production stage;
(c) means for discharging a raw synthesis gas stream containing hydrogen, carbon monoxide (CO) and carbon dioxide (CO₂) from the at least one synthesis gas production stage;
(d) a first cooling apparatus, means for discharging the raw synthesis gas stream into the first cooling apparatus means for discharging a cooled raw synthesis gas stream from the cooling apparatus;
(e) a CO conversion plant comprising at least one CO conversion stage, means for introducing the cooled raw synthesis gas stream into the CO conversion plant, means for discharging a converted synthesis gas stream which is enriched in hydrogen and carbon dioxide and depleted in carbon monoxide relative to the raw synthesis gas stream;
(f) a second cooling apparatus, means for introducing the converted synthesis gas stream into the second cooling apparatus, means for discharging a cooled converted synthesis gas stream from the second cooling apparatus;
(g) a carbon dioxide absorption column which operates according to the principle of a gas scrubbing having a physical or chemical scrubbing medium, wherein the carbon dioxide absorption column comprises:
   (g1) at least one mass transfer zone in the form of a structured packing and/or a random packing and/or or a tray column,
   (g2) an inlet for the cooled converted synthesis gas stream,
   (g3) an outlet for a first synthesis gas stream depleted in carbon dioxide at the upper end of the absorption column,
   (g4) an outlet for a scrubbing medium stream enriched in carbon dioxide at the lower end of the absorption column,
   (g5) an inlet for a fine scrubbing medium stream in the upper region of the absorption column, wherein the fine scrubbing medium stream is obtained by hot regeneration of at least a portion of the scrubbing medium stream enriched in carbon dioxide,
   (g6) an inlet for a main scrubbing medium stream arranged in the upper region of the absorption column but below the inlet for the fine scrubbing medium stream, wherein the main scrubbing medium stream is obtained by flash regeneration of at least a portion of the scrubbing medium stream enriched in carbon dioxide, wherein at least one flash gas stream whose carbon dioxide concentration is higher than that in the first synthesis gas stream depleted in carbon dioxide is obtained, means for introducing the cooled converted synthesis gas stream into the carbon dioxide absorption column;
(h) means for discharging the first synthesis gas stream depleted in carbon dioxide as a hydrogen-rich synthesis gas stream at the upper end of the absorption column;
(i) optionally: means for supplying the hydrogen-rich synthesis gas stream to at least a further purification, conditioning or processing apparatus;
   **characterized in that**
(j) the carbon dioxide absorption column comprises a further outlet which is arranged below the inlet for the fine scrubbing medium stream as a side draw and by means of which a second synthesis gas stream depleted in carbon dioxide, whose carbon dioxide concentration is higher than that in the first synthesis gas stream depleted in carbon dioxide, may be discharged;
(k) wherein means which allow at least a portion of the second synthesis gas stream depleted in carbon dioxide to be utilized as a portion of a fuel gas or process gas in the synthesis gas production stage or to form the fuel gas or process gas in the synthesis gas production stage are comprised.

The plant for producing the hydrogen-rich synthesis gas stream from the carbon-containing input gas stream having reduced carbon dioxide emission according to the invention is of advantage in that the plant decreases the carbon emissions from reforming by using hydrogen fueling without consuming a high amount of energy for the purification of the hydrogen in the gas cleaning unit. The hydrogen rich fuel gas stream is withdrawn between the fine scrubbing and the main scrubbing section of the carbon dioxide absorption column and uses it as hydrogen fuel within the reforming section through which the solvent requirement for the fine scrubbing section is reduced which in turn enables savings in electrical and low-pressure steam consumption, and enables decreasing diameters of both carbon dioxide absorption column and regenerator slightly. Flash regeneration of the scrubbing media stream from the carbon dioxide absorption column is performed to obtain the main scrubbing medium stream, where the regeneration is done by flashing (pressure decrease) and consumes only a minimum energy for re-compression of the solvent. During flashing, CO₂ is removed from the solvent and the so-called auto-refrigeration effect causes a decrease in the temperature of the system, which is beneficial for absorption efficiency. Hot regeneration of the scrubbing media stream from the carbon dioxide absorption column is performed to obtain the fine scrubbing medium stream. In the fine scrubbing section, a stream of cooled methanol from the hot regeneration unit is used for absorption. The regeneration of this type of solvent requires more energy and additional equipment than the solvent regenerated by flashing only. Therefore, reducing this type of solvent leads to savings in utility consumption and capital expenditures.

Embodiments of the invention eliminate the aforementioned drawbacks in existing known approaches by decreasing the carbon emissions from reforming by using a portion of the synthesis gas stream from the carbon dioxide absorption column as a fuel hydrogen without using high energy for the purification of hydrogen in the gas cleaning unit.

Additional aspects, advantages, features and objects of the invention are made apparent from the drawings and the detailed description of the illustrative embodiments construed in conjunction with the appended claims that follow. It will be appreciated that features of the invention are susceptible to being combined in various combinations without departing from the scope of the invention as defined by the appended claims.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the invention is not limited to specific methods and instrumentalities disclosed herein. Moreover, those in the art will understand that the drawings are not to scale. Wherever possible, the same elements have been indicated by identical numbers. Embodiments of the invention will now be described, by way of example only, with reference to the following diagrams wherein:

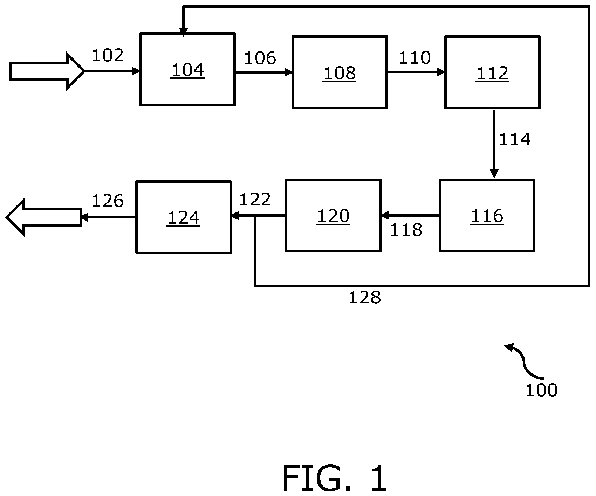

**FIG.** 1 is a block diagram of a prior art plant for producing hydrogen-rich synthesis gas stream from a carbon-containing input gas stream;

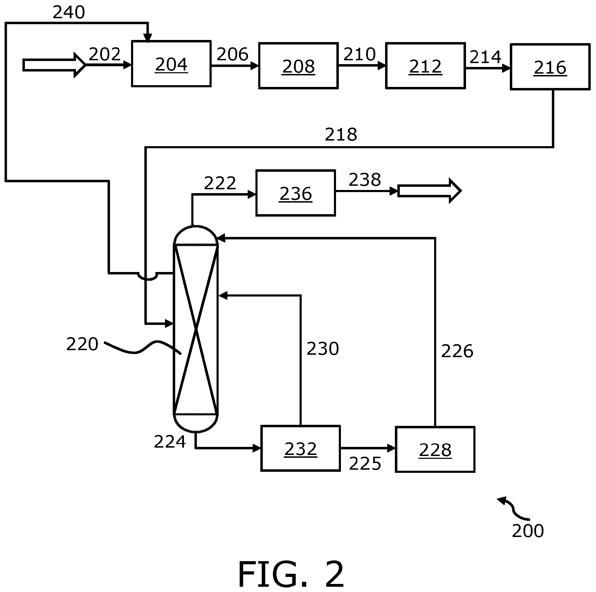

**FIG.** 2 is a block diagram of a plant for producing hydrogen-rich synthesis gas stream from a carbon-containing input gas stream having reduced carbon dioxide emission by utilizing at least a portion of a second synthesis gas stream depleted in carbon dioxide as a portion of a fuel gas or process gas or forms the fuel gas or process gas in a synthesis gas production stage according to an embodiment of the present disclosure;

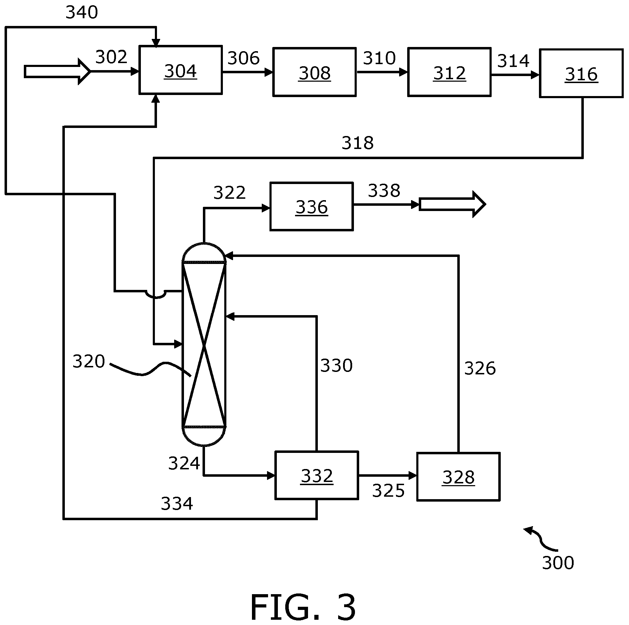

**FIG.** 3 is a block diagram of a plant for producing hydrogen-rich synthesis gas stream from a carbon-containing input gas stream having reduced carbon dioxide emission by utilizing at least a portion of a second synthesis gas stream depleted in carbon dioxide in addition with at least a portion of at least one flash gas stream as a portion of a fuel gas or process gas or forms the fuel gas or process gas in a synthesis gas production stage according to an embodiment of the present disclosure.

### DETAILED DESCRIPTION OF EMBODIMENTS

The following detailed description illustrates embodiments of the invention and ways in which they can be implemented. Although some modes of carrying out the invention have been disclosed, those skilled in the art would recognize that other embodiments for carrying out or practicing the invention are also possible.

As used herein, several terms are defined below:
Synthesis gas production conditions, for example steam reforming conditions or autothermal reforming (ATR) conditions, and carbon monoxide (CO) shift conversion conditions (CO conversion conditions) are known to those skilled in the art from the prior art. These are the physicochemical conditions under which a measurable, preferably industrially relevant, conversion of hydrocarbons to synthesis gas products is achieved. For example, in a context of steam reforming, important parameters include adjustment of a suitable steam reforming entry temperature of typically about 1000 °C and addition of steam to an input gas containing hydrocarbons and thus adjustment of a steam/carbon ratio (S/C ratio). Typical values for the S/C ratio are between 0.6 and 3.0 mol/mol. Typical steam reforming inlet temperatures are up to 700 °C and typically, the temperature range for autothermal reforming is between 950 and 1050 °C. Necessary adjustments of these conditions to the respective operational requirements will be made by those skilled in the art on the basis of routine experiments, depending on the specific synthesis gas production stage or stages. Any specific reaction conditions disclosed may serve here as a guide, but they should not be regarded as limiting in relation to the scope of the invention.

Pressures, if any, are reported in absolute pressure units, bara for short, or in gauge pressure units, barg for short, unless otherwise stated in the particular individual context.

A fluid or fluidical connection between two regions of an apparatus or a plant according to the invention is to be understood as meaning any type of connection whatsoever which makes it possible for a fluid, for example a gas stream, to flow from one to the other of the two regions, neglecting any interposed regions or components. In particular, a direct fluid connection is to be understood as meaning any type of connection whatsoever which makes it possible for a fluid, for example a gas stream, to flow directly from one to the other of the two regions, wherein no further regions or components are interposed with the exception of purely transportational operations and the means required therefor, for example pipelines, valves, pumps, compressors, reservoirs. One example would be a pipeline leading directly from one to the other of the two regions.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e. for example pipelines, pumps, compressors, valves, which seem necessary or sensible to said skilled person for performance of this process step on the basis of his knowledge of the art.

For the purposes of this description, steam is to be understood as being synonymous with water vapor unless the opposite is indicated in an individual case. By contrast, the term "water" refers to water in a liquid state of matter unless otherwise stated in an individual case.

In the context of the present disclosure, a physical or chemical carbon dioxide separation process is understood to be a process that enables a fluid mixture, for example a gas mixture, to be separated into its components or undesirable components to be separated from this mixture by applying suitable physicochemical conditions, for example by phase transition such as condensation or by using a suitable sorbent. When a sorption process is used, it may be based on adsorption, i.e., binding of the substance or substances to be separated to a surface or interface of the solid adsorbent, or on absorption, i.e., uptake of the substance or substances to be separated into the volume of the liquid or solid adsorbent. The substance or substances separated and bound by means of sorption are referred to as adsorbate or absorbate. The binding forces acting in this process can be of a physical or chemical nature. Accordingly, weaker, non-specific binding forces, e.g. van der Waals forces, usually act in physical sorption, whereas stronger, more specific binding forces act in chemical sorption and the adsorbate and/or absorbent is chemically changed.

As synonyms for the term absorbent, in the case of liquid absorbents, the terms washing agent, solvent or scrubbing medium are used in the context of the present disclosure. Gas cleaning by such absorbent is also termed gas scrubbing.

A specific, physical absorption process is the gas scrubbing with chilled methanol, which uses methanol as absorbent or scrubbing agent, the temperature of which has been cooled by means of cold-generating processes below ambient temperature, preferably below 0 °C, most preferably below - 30 °C. This process is known to the skilled person as the Rectisol process.

In contrast, the amine washes, which are known per se and frequently used for the absorption of carbon dioxide, are based on chemical absorption (chemisorption) and can also achieve high purities even at relatively low pressures in the absorption column.

In amine washing, slightly alkaline aqueous solutions of amines, often ethanolamine derivatives, are used in an absorption unit (absorption section) usually designed as a washing column. Absorption takes place at low temperature, e.g. 40 °C, and slightly elevated pressure, e.g. 8 bara. Fresh or regenerated absorbent is fed at the top of the column and the gas stream to be separated is introduced in the lower section of the scrubbing column. In this process, carbon dioxide is reversibly chemically absorbed. The gas, which is depleted in carbon dioxide, leaves the column at the top and the loaded scrubbing agent is discharged at the bottom of the column and fed into a desorption section, which is also frequently designed as a separation column. In the desorption column (regeneration section), the reaction reverses the chemical equilibrium at a higher temperature and lower pressure, thus releasing the absorbed carbon dioxide as a gas. It can then be discharged at the head of the desorption column for further use or disposal. The absorbent regenerated in this way is returned to the absorption section.

An absorbent commonly used in amine scrubbing is methyldiethanolamine (MDEA), which is mostly used in aqueous solutions. In addition, activators, for example piperazine, are often added to accelerate carbon dioxide absorption, as described, for example, in the article "The Activator Mechanism of Piperazine in Aqueous Methyldiethanolamine Solutions," J. Ying et al, Energy Procedia 114 (2017), pp. 2078 - 2087. These mixtures are then referred to as activated MDEA solutions (aMDEA).

In an alternative wording, a fine scrubbing medium, for example received from regeneration by heating the laden scrubbing medium ("hot regeneration"), is often designated as lean scrubbing medium, and a main or bulk scrubbing medium, for example received from regenerating the laden scrubbing medium by fast pressure decrease ("flash regeneration"), is often designated as semi-lean scrubbing medium.

According to a first aspect, the invention provides a process for producing a hydrogen-rich synthesis gas stream from a carbon-containing input gas stream having reduced carbon dioxide emission, comprising the steps of:
(a) providing a sulfur-free or desulfurized, carbon-containing input gas stream;
(b) introducing the input gas stream into at least one synthesis gas production stage, selected from a group comprising:
   steam reforming stage, gas-heated reforming stage (GHR), autothermal reforming stage (ATR), catalytic partial oxidation stage (CPOX), noncatalytic partial oxidation stage (POX);
(c) converting the carbon-containing input gas stream introduced into the at least one synthesis gas production stage under synthesis gas production conditions and discharging a raw synthesis gas stream containing hydrogen, carbon monoxide and carbon dioxide from the at least one synthesis gas production stage;
(d) introducing the raw synthesis gas stream into a first cooling apparatus, cooling the raw synthesis gas stream in the first cooling apparatus, discharging the cooled raw synthesis gas stream from the first cooling apparatus;
(e) introducing the cooled raw synthesis gas stream into a carbon monoxide (CO) conversion plant comprising at least one CO conversion stage, converting the cooled raw synthesis gas stream introduced into the CO conversion plant under CO conversion conditions to afford a converted synthesis gas stream, discharging the converted synthesis gas stream which is enriched in hydrogen and carbon dioxide and depleted in carbon monoxide relative to the raw synthesis gas stream;
(f) introducing the converted synthesis gas stream into a second cooling apparatus, cooling the converted the synthesis gas stream in the second cooling apparatus, discharging the cooled converted synthesis gas stream from the second cooling apparatus;
(g) introducing the cooled converted synthesis gas stream into a carbon dioxide absorption column which operates according to the principle of a gas scrubbing having a physical or chemical scrubbing medium, wherein the carbon dioxide absorption column comprises:
   (g1) at least one mass transfer zone, in the form of a structured packing and/or a random packing and/or a tray column,
   (g2) an inlet for the cooled converted synthesis gas stream,
   (g3) an outlet for a first synthesis gas stream depleted in carbon dioxide at the upper end of the absorption column,
   (g4) an outlet for a scrubbing medium stream enriched in carbon dioxide at the lower end of the absorption column,
   (g5) an inlet for a fine scrubbing medium stream in the upper region of the absorption column, wherein the fine scrubbing medium stream is obtained by hot regeneration of at least a portion of the scrubbing medium stream enriched in carbon dioxide,
   (g6) an inlet for a main scrubbing medium stream arranged in the upper region of the absorption column but below the inlet for the fine scrubbing medium stream, wherein the main scrubbing medium stream is obtained by flash regeneration of at least a portion of the scrubbing medium stream enriched in carbon dioxide to obtain at least one flash gas stream whose carbon dioxide concentration is higher than that in the first synthesis gas stream depleted in carbon dioxide;
(h) contacting the cooled converted synthesis gas stream in the carbon dioxide absorption column with the main scrubbing medium stream and with the fine scrubbing medium stream, discharging the first synthesis gas stream depleted in carbon dioxide as a hydrogen-rich synthesis gas stream at the upper end of the absorption column;
(i) optionally supplying the hydrogen-rich synthesis gas stream to at least one further purifying, conditioning or processing step;
   **characterized in that**
(j) the carbon dioxide absorption column comprises a further outlet which is arranged below the inlet for the fine scrubbing medium stream as a side draw and by means of which a second synthesis gas stream depleted in carbon dioxide, whose carbon dioxide concentration is higher than that in the first synthesis gas stream depleted in carbon dioxide, is discharged;
(k) wherein at least a portion of the second synthesis gas stream depleted in carbon dioxide is utilized as a portion of a fuel gas or process gas in the synthesis gas production stage or forms the fuel gas or process gas in the synthesis gas production stage.

The process for producing the hydrogen according to the invention is of advantage in that the process decreases the carbon emissions from reforming by using hydrogen fueling without consuming a high amount of energy for the purification of the hydrogen in the gas cleaning unit. The process includes withdrawing a hydrogen rich fuel gas stream between the fine and bulk wash section or main wash section of the carbon dioxide absorption column and using it as hydrogen fuel within the reforming section through which the solvent requirement for the fine scrubbing section is reduced which in turn enables savings in electrical and low-pressure steam consumption, and enables decreasing diameters of both carbon dioxide absorption column and regenerator slightly. The process of the invention includes flash regeneration of the scrubbing media stream from the carbon dioxide absorption column to obtain the main scrubbing medium stream, where the regeneration is done by flashing (pressure decrease) and consumes only a minimum energy for re-compression of the solvent. During flashing, CO₂ is removed from the solvent and the so-called auto-refrigeration effect causes a decrease in the temperature of the system, which is beneficial for absorption efficiency. The process of the invention includes hot regeneration of the scrubbing media stream from the carbon dioxide absorption column to obtain the fine scrubbing medium stream. In the fine scrubbing section, a stream of cooled methanol from the hot regeneration unit is used for absorption. The regeneration of this type of solvent requires more energy and additional equipment than the solvent regenerated by flashing only. Therefore, reducing this type of solvent leads to savings in utility consumption and capital expenditures.

The hydrogen-rich synthesis gas stream and the second synthesis gas stream from the carbon dioxide absorption column is cold about < -20 °C as withdrawn from the carbon dioxide absorption column. The hydrogen-rich synthesis gas stream and the second synthesis gas stream may be routed through a Spiral-Wound Heat Exchanger (multi-fluid heat exchanger type), where the cold of both the first hydrogen-rich synthesis gas stream from the top of the carbon dioxide absorption column and the second synthesis gas stream from the side draw for the Hydrogen fuel are heated against the warm feed gas from the CO conversion plant.

Optionally, in addition to the at least a portion of the second synthesis gas stream depleted in carbon dioxide at least a portion of the at least one flash gas stream is also utilized as a portion of a fuel gas or process gas in the synthesis gas production stage or forms the fuel gas or process gas in the synthesis gas production stage. Optionally, other sources of hydrogen rich streams within the carbon dioxide absorption column are used. The advantage of taking a hydrogen stream from the high pressure (HP) and medium pressure (MP) recycle gas, which in an example are retrieved from the corresponding flash desorption stages, would be that the recycle gas compressor can be left out of the design and therefore capital expenditures for the machine as well as operating costs (electricity, cooling medium) can be saved.

Optionally, in addition to the at least a portion of the second synthesis gas stream depleted in carbon dioxide at least a portion of the at least one flash gas stream is also utilized as a portion of a fuel gas or process gas in the synthesis gas production stage or forms the fuel gas or process gas in the synthesis gas production stage. Optionally, a portion of the second synthesis gas is mixed with at least a portion of the first synthesis gas, and the mixed gas is used at least partially as a feed gas for chemical syntheses, in an example for methanol synthesis.

Optionally, at least a portion of the second synthesis gas is mixed with at least a portion of the first synthesis gas, and the mixed gas is used at least partially as a portion of a fuel gas or process gas or forms the fuel gas or process gas.

According to the invention, at least a portion of the second synthesis gas stream depleted in carbon dioxide is utilized as a portion of a fuel gas or process gas in the synthesis gas production stage. This leads to further reductions of carbon emitted from the process.

Optionally, in addition at least a portion of the at least one flash gas stream is utilized as a portion of a fuel gas or process gas in the synthesis gas production stage.. This leads to further reductions of carbon emitted from the process.

Optionally, the synthesis gas production stage is in the form of a steam reforming stage and comprises a multiplicity of reformer tubes filled with a solid, particulate reforming catalyst, the reformer tubes are arranged in a reformer furnace whose interior is heated by burning a fuel gas with oxygen and/or air to form a flue gas using a multiplicity of burners, the fuel gas comprises at least a portion of the second synthesis gas stream depleted in carbon dioxide.. This leads to further reductions of carbon emitted from the process.

Optionally, the synthesis gas production stage is in the form of an autothermal reforming stage (ATR), catalytic partial oxidation stage (CPOX) or noncatalytic partial oxidation stage (POX), the input gas stream comprises at least a portion of the second synthesis gas stream depleted in carbon dioxide and/or the second synthesis gas stream depleted in carbon dioxide is at least partially used as fuel gas. This leads to further reductions of carbon emitted from the process.

Optionally, the synthesis gas production stage is in the form of a combination of a steam reforming stage and an autothermal reforming stage (ATR), gas-heated reforming stage (GHR), catalytic partial oxidation stage (CPOX) or noncatalytic partial oxidation stage (POX), the input gas stream comprises a portion of the second synthesis gas stream depleted in carbon dioxide and/or the second synthesis gas stream depleted in carbon dioxide is at least partially used as fuel gas.. This leads to further reductions of carbon emitted from the process.

Optionally, the entire second synthesis gas stream depleted in carbon dioxide or the entire second synthesis gas stream depleted in carbon dioxide and the entire at least one flash gas stream is utilized as a portion of a fuel gas or process gas.. This leads to further reductions of carbon emitted from the process.

Optionally, the scrubbing medium contains one or more components selected from the following group: methanol, N-methyl pyrrolidone (NMP), secondary amines, preferably diethanolamine, tertiary amines, preferably methyldiethanolamine, methyldiethanolamine with an activator, preferably methyldiethanolamine with piperazine, polyethylene glycol dialkyl ether, preferably polyethylene glycol dimethyl ether, ammonia solutions, preferably aqueous ammonia solutions.

Optionally, the side draw is arranged at least one theoretical plate, preferably at least two theoretical plates, most preferably at least three theoretical plates below the outlet for the first synthesis gas stream depleted in carbon dioxide.

Optionally, the side draw comprises a droplet separator.

Optionally, the second synthesis gas stream depleted in carbon dioxide is passed through an expansion turbine for recovery of compression energy before it is utilized as a portion of a fuel gas or process gas or forms the fuel gas or process gas.

Optionally, the side draw is arranged below the inlet for the main scrubbing medium stream.

Optionally, the carbon dioxide absorption column comprises two mass transfer zones arranged spaced apart on top of one another inside the carbon dioxide absorption column, the upper mass transfer zone serves the fine scrubbing and the lower mass transfer zone serves the main scrubbing, the inlet for the fine scrubbing medium stream is arranged above the upper mass transfer zone and the inlet for the main scrubbing medium stream is arranged between the two mass-transfer zones and the side draw for discharging the second synthesis gas stream depleted in carbon dioxide is arranged below the inlet for the fine scrubbing medium stream and above the inlet for the main scrubbing medium stream.

Optionally, the carbon dioxide absorption column comprises three mass transfer zones arranged spaced apart on top of one another inside the carbon dioxide absorption column, the upper mass transfer zone serves the fine scrubbing and the middle and the lower mass transfer zone serve the main scrubbing, the inlet for the fine scrubbing medium stream is arranged above the upper mass transfer zone and the inlet for the main scrubbing medium stream is arranged above the middle mass transfer zone and the side draw for discharging the second synthesis gas stream depleted in carbon dioxide is arranged in the region of the mass transfer zones for the main scrubbing, preferably in an intermediate space between the middle and the lower mass transfer zone.

Optionally, the carbon dioxide absorption column is divided into two sub-columns which are arranged on top of one another or preferably next to one another, one sub-column comprises at least one mass transfer zone for the fine scrubbing and the other sub-column comprises at least one mass transfer zone for the main scrubbing.

Optionally, the carbon dioxide concentration in the second synthesis gas stream depleted in carbon dioxide is between 0.5 and 15 mol%, preferably between 1 and 10 mol%, most preferably between 2 and 6 mol%.

Optionally, the ratio of the molar flows of the second synthesis gas stream depleted in carbon dioxide to the first synthesis gas stream depleted in carbon dioxide is between 0.5% and 30%, preferably between 1% and 20%.

Optionally, the ratio of the molar flows of the at least one flash gas stream to the second synthesis gas stream depleted in carbon dioxide is between 10% and 200%, preferably between 20% and 100%.

Optionally, the at least one further purifying, conditioning or processing step (60) comprises a pressure swing adsorption apparatus (PSA) and/or a liquid nitrogen scrubbing (LNW) stage and/or a cryogenic condensation stage, in each case at least one offgas stream is obtained and utilized as a portion of a fuel gas or process gas.

Optionally, the carbon dioxide absorption column comprises a further mass transfer zone which is arranged above a mass transfer zone for the fine scrubbing and serves for backwashing of the scrubbing medium from the first synthesis gas stream depleted in carbon dioxide.

According to a second aspect, the invention provides a plant for producing a hydrogen-rich synthesis gas stream from a carbon-containing input gas stream having reduced carbon dioxide emission, comprising the following assemblies and constituents fluidically connected to one another:
(a) means for providing a sulfur-free or desulfurized, carbon-containing input gas stream;
(b) at least one synthesis gas production stage selected from a group comprising:
   steam reforming stage, gas-heated reforming stage (GHR), autothermal reforming stage (ATR), catalytic partial oxidation stage (CPOX), noncatalytic partial oxidation stage (POX);
   means for introducing the input gas stream into the at least one synthesis gas production stage;
(c) means for discharging a raw synthesis gas stream containing hydrogen, carbon monoxide (CO) and carbon dioxide (CO₂) from the at least one synthesis gas production stage;
(d) a first cooling apparatus, means for discharging the raw synthesis gas stream into the first cooling apparatus means for discharging a cooled raw synthesis gas stream from the cooling apparatus;
(e) a CO conversion plant comprising at least one CO conversion stage, means for introducing the cooled raw synthesis gas stream into the CO conversion plant, means for discharging a converted synthesis gas stream which is enriched in hydrogen and carbon dioxide and depleted in carbon monoxide relative to the raw synthesis gas stream;
(f) a second cooling apparatus, means for introducing the converted synthesis gas stream into the second cooling apparatus, means for discharging a cooled converted synthesis gas stream from the second cooling apparatus;
(g) a carbon dioxide absorption column which operates according to the principle of a gas scrubbing having a physical or chemical scrubbing medium, wherein the carbon dioxide absorption column comprises:
   (g1) at least one mass transfer zone in the form of a structured packing and/or a random packing and/or or a tray column,
   (g2) an inlet for the cooled converted synthesis gas stream,
   (g3) an outlet for a first synthesis gas stream depleted in carbon dioxide at the upper end of the absorption column,
   (g4) an outlet for a scrubbing medium stream enriched in carbon dioxide at the lower end of the absorption column,
   (g5) an inlet for a fine scrubbing medium stream in the upper region of the absorption column, wherein the fine scrubbing medium stream is obtained by hot regeneration of at least a portion of the scrubbing medium stream enriched in carbon dioxide,
   (g6) an inlet for a main scrubbing medium stream arranged in the upper region of the absorption column but below the inlet for the fine scrubbing medium stream, wherein the main scrubbing medium stream is obtained by flash regeneration of at least a portion of the scrubbing medium stream enriched in carbon dioxide, wherein at least one flash gas stream whose carbon dioxide concentration is higher than that in the first synthesis gas stream depleted in carbon dioxide is obtained, means for introducing the cooled converted synthesis gas stream into the carbon dioxide absorption column;
(h) means for discharging the first synthesis gas stream depleted in carbon dioxide as a hydrogen-rich synthesis gas stream at the upper end of the absorption column;
(i) optionally: means for supplying the hydrogen-rich synthesis gas stream to at least a further purification, conditioning or processing apparatus;
   **characterized in that**
(j) the carbon dioxide absorption column comprises a further outlet which is arranged below the inlet for the fine scrubbing medium stream as a side draw and by means of which a second synthesis gas stream depleted in carbon dioxide, whose carbon dioxide concentration is higher than that in the first synthesis gas stream depleted in carbon dioxide, may be discharged;
(k) wherein means which allow at least a portion of the second synthesis gas stream depleted in carbon dioxide to be utilized as a portion of a fuel gas or process gas in the synthesis gas production stage or to form the fuel gas or process gas in the synthesis gas production stage are comprised.

The plant for producing the hydrogen-rich synthesis gas stream from the carbon-containing input gas stream having reduced carbon dioxide emission according to the invention is of advantage in that the plant decreases the carbon emissions from reforming by using hydrogen fueling without consuming a high amount of energy for the purification of the hydrogen in the gas cleaning unit. The hydrogen rich fuel gas stream is withdrawn between the fine scrubbing and the main scrubbing section of the carbon dioxide absorption column and uses it as hydrogen fuel within the reforming section through which the solvent requirement for the fine scrubbing section is reduced which in turn enables savings in electrical and low-pressure steam consumption, and enables decreasing diameters of both carbon dioxide absorption column and regenerator slightly. Flash regeneration of the scrubbing media stream from the carbon dioxide absorption column is performed to obtain the main scrubbing medium stream, where the regeneration is done by flashing (pressure decrease) and consumes only a minimum energy for re-compression of the solvent. During flashing, CO₂ is removed from the solvent and the so-called auto-refrigeration effect causes a decrease in the temperature of the system, which is beneficial for absorption efficiency. Hot regeneration of the scrubbing media stream from the carbon dioxide absorption column is performed to obtain the fine scrubbing medium stream. In the fine scrubbing section, a stream of cooled methanol from the hot regeneration unit is used for absorption. The regeneration of this type of solvent requires more energy and additional equipment than the solvent regenerated by flashing only. Therefore, reducing this type of solvent leads to savings in utility consumption and capital expenditures.

The final carbon dioxide depleted first synthesis gas stream may be further treated, for example, for trace component removal in a Liquid Nitrogen Wash, and then finally sent along with Nitrogen to an ammonia synthesis unit. In the case of using a Rectisol stage, the side-draw-off is taken from between the fine and bulk wash section. The fine wash section of the column is located at the upper part, the bulk wash section at the lower part. In the bulk wash section, a major part of CO₂ is absorbed by a cold methanol stream, which has a residual CO₂ loading. The regeneration is done by flashing (pressure decrease) and consumes only a little energy for re-compression of the solvent. During flashing, CO₂ is removed from the solvent and the so-called auto-refrigeration effect causes a decrease in the temperature of the system, which is beneficial for absorption efficiency. The fine wash section, however, is responsible for removing the residual parts of CO₂ down to a lower percentage down to ppm levels (10 ppm to >1 mole%). In this washing section, a stream of cooled methanol from the hot regeneration column is used for absorption. The regeneration of this type of solvent requires more energy and additional equipment than the solvent regenerated by flashing only. Therefore, reducing this type of solvent leads to savings in utility consumption and capital expenditures.

### NUMERICAL EXAMPLES

Table 1 illustrates two different applications with either fuel grade (Invention 1) or chemical grade H₂ production (Invention 2), also covering different total H₂ production capacities (240 kNm³/h in Invention 1 vs 490 kNm³/h in Invention 2). In both examples, the CO₂ content in the flue gas is adjusted to meet a value below or equal to 7%, to reach a certain low CO₂ content per unit amount of H₂ produced.

The second synthesis gas stream composition is 4.5% CO₂ and 93% H₂ (depending on e. g. reforming feed gas and reforming setup) and has only a slightly increased CO₂ content (>1% CO₂, 97% H₂) as compared to the H₂ fueling stream as described in the prior art (Fig. 1, stream (128)). The calculated results for both invention 1 and 2 and prior art (comparative examples 1 and 2) are obtained from a simulation using Aspen Plus and are given in Table 1.

The process of the present invention is not only applicable to physical absorption like the Rectisol process, but also for chemical absorption like amine wash technology, or other gas cleaning technologies known from the prior art, like the Selexol or Purisol processes.

**Table1**

| **Parameters** | **Unit** | **Prior art 1 (comparative)** | **Invention 1** | **Prior art 2 (comparative)** | **Invention 2** |
|---|---|---|---|---|---|
| H₂ fueling | % of total H2 | 1.5% | 1.5% | 5.5% | 5.5% |
| CO₂ in flue gas | - | 5.8% | 6.4% | 6.7% | 7.0% |
| Electricity consumption absorber | - | 100% | 99.8% | 100% | 99.0% |
| LP steam consumption absorber | - | 100% | 98.7% | 100% | 92.9% |
| Absorber diameter | - | 100% | 99% | 100% | 98% |
| Regenerator diameter | - | 100% | 99% | 100% | 97% |

The process of the invention may also be applied in hydrogen production setups as well, not only in ammonia production. The process of the invention may also be applied in fuel grade as well as chemical grade hydrogen production setups. The process of the invention may also be applied in methanol-ammonia co-production plants.

The setup according to the invention can be applied downstream of autothermal reforming, partial oxidation, gas-heated reforming or "two step" reforming (steam methane reformer with downstream air blown ATR, which are typically used for ammonia production), as well as any setup considering an electrolysis integration.

Embodiments of the invention substantially eliminate or at least partially address the aforementioned technical drawbacks in existing technologies for decreasing the carbon emissions from reforming by using hydrogen fueling without using too much energy for the purification of the hydrogen in the gas cleaning unit.

### DETAILED DESCRIPTION OF THE DRAWINGS

**FIG. 1** is a block diagram of a prior art plant **100** for producing hydrogen-rich synthesis gas stream from a carbon-containing input gas stream **102.** The plant **100** comprises a sulfur-free or desulfurized, carbon-containing input gas stream providing means, a synthesis gas production stage **104,** an input gas stream introducing means, a raw synthesis gas stream discharging means, a first cooling apparatus **108,** a raw synthesis gas stream introducing means, a cooled raw synthesis gas stream discharging means, a carbon monoxide (CO) conversion plant **112,** a cooled raw synthesis gas stream introducing means, a converted synthesis gas stream discharging means, a second cooling apparatus **116,** a converted synthesis gas stream introducing means, a cooled converted synthesis gas stream discharging means, a carbon dioxide absorption column **120,** a cooled converted synthesis gas stream inlet, a first synthesis gas stream discharging means, a purification, conditioning or processing apparatus **124,** a first synthesis gas stream supplying means, a purified, conditioned or processed synthesis gas stream discharging means, and a second synthesis gas stream supplying means. The hydrogen-rich synthesis gas stream from the carbon-containing input gas stream is produced by providing a sulfur-free or desulfurized, carbon-containing input gas stream **102** from the carbon-containing input gas stream providing means. The carbon-containing input gas stream, preferably the sulfur-free or desulfurized input gas stream **102** is introduced into the at least one synthesis gas production stage **104** through the input gas stream introducing means. The at least one synthesis gas production stage **104** is selected from a group comprising steam reforming stage, gas-heated reforming stage (GHR), autothermal reforming stage (ATR), catalytic partial oxidation stage (CPOX), noncatalytic partial oxidation stage (POX). The carbon-containing input gas stream **102** is converted into a raw synthesis gas stream **106** containing hydrogen, carbon monoxide (CO) and carbon dioxide (CO2) under synthesis gas production conditions in the at least one synthesis gas production stage **104.** The raw synthesis gas stream **106** is discharged from the at least one synthesis gas production stage **104** through the raw synthesis gas stream discharging means. The raw synthesis gas stream **106** is introduced into the first cooling apparatus **108** through the raw synthesis gas stream introducing means for cooling. The cooled raw synthesis gas stream **110** is discharged from the first cooling apparatus **108** through the cooled raw synthesis gas stream discharging means. The cooled raw synthesis gas stream **110** is introduced into the CO conversion plant **112** through the cooled raw synthesis gas stream introducing means. The CO conversion plant **112** comprises at least one CO conversion stage (CO shift stage) for converting the cooled raw synthesis gas stream **110** introduced into the CO conversion plant **112** under CO conversion conditions to afford a converted synthesis gas stream **114.** The converted synthesis gas stream **114** which is enriched in hydrogen and carbon dioxide and depleted in carbon monoxide relative to the raw synthesis gas stream **106** is discharged from the CO conversion plant **112** through the converted synthesis gas stream discharging means. The converted synthesis gas stream **114** is introduced into the second cooling apparatus **116** through the converted synthesis gas stream introducing means for cooling. The cooled converted synthesis gas stream **118** is discharged from the second cooling apparatus **116** through the cooled converted synthesis gas stream discharging means. The cooled converted synthesis gas stream **118** is introduced into the carbon dioxide absorption column **120** through the cooled converted synthesis gas stream inlet. The carbon dioxide absorption column **120** operates according to the principle of a gas scrubbing having a physical or chemical scrubbing medium. A first synthesis gas stream **122** depleted in carbon dioxide is discharged as a hydrogen-rich synthesis gas stream at an upper end of the absorption column **120** through the first synthesis gas stream discharging means. Further, a carbon dioxide rich gas stream is ddischarged from the absorption column **120** through a carbon dioxide rich gas stream discharging means (not shown). The first synthesis gas stream **122** is optionally supplied to the at least one further purifying, conditioning or processing apparatus **124** through the hydrogen-rich synthesis gas stream supplying means and a purified, conditioned or processed hydrogen-rich synthesis gas stream **126** is discharged through the purified, conditioned or processed synthesis gas stream discharging means. At least a portion of the first synthesis gas stream **122** depleted in carbon dioxide and having the same composition as 122, is branched off as stream **128,** recycled and utilized as a portion of a fuel gas or process gas or forms the fuel gas in the synthesis gas production stage **104.**

**FIG. 2** is a block diagram of a plant **200** for producing a hydrogen rich synthesis gas stream from a carbon-containing input gas stream having reduced carbon dioxide emission by utilizing at least a portion of a second synthesis gas stream depleted in carbon dioxide as a portion of a fuel gas or process gas or forms the fuel gas or process gas in a synthesis gas production stage **204** according to an embodiment of the present disclosure. The plant **200** comprises a sulfur-free or desulfurized, carbon-containing input gas stream providing means, at least one synthesis gas production stage **204,** an input gas stream introducing means, a raw synthesis gas stream discharging means, a first cooling apparatus **208,** a raw synthesis gas stream introducing means, a cooled raw synthesis gas stream discharging means, a carbon monoxide (CO) conversion (CO shift) plant **212,** a cooled raw synthesis gas stream introducing means, a converted synthesis gas stream discharging means, a second cooling apparatus **216,** a converted synthesis gas stream introducing means, a cooled converted synthesis gas stream discharging means, a carbon dioxide absorption column **220,** a cooled converted synthesis gas stream inlet, a first synthesis gas stream outlet, a scrubbing medium stream outlet, a fine scrubbing medium stream inlet, a hot regeneration unit **228,** a main scrubbing medium stream inlet, a flash regeneration unit **232,** a purification, conditioning or processing apparatus **236, a** hydrogen-rich synthesis gas stream supplying means, a purified, conditioned or processed hydrogen-rich synthesis gas stream discharging means, a second synthesis gas stream outlet. The hydrogen-rich synthesis gas stream is produced by providing a sulfur-free or desulfurized, carbon-containing input gas stream **202.** The carbon-containing input gas stream **202,** preferably the sulfur-free or desulfurized input gas stream is introduced into the at least one synthesis gas production stage **204** through the input gas stream introducing means. The at least one synthesis gas production stage **204** is selected from a group comprising steam reforming stage, gas-heated reforming stage (GHR), autothermal reforming stage (ATR), catalytic partial oxidation stage (CPOX), noncatalytic partial oxidation stage (POX). The carbon-containing input gas stream **202** is converted into a raw synthesis gas stream **206** containing hydrogen, carbon monoxide (CO) and carbon dioxide (CO2) under synthesis gas production conditions in the at least one synthesis gas production stage **204.** The raw synthesis gas stream **206** is discharged from the at least one synthesis gas production stage **204** through the raw synthesis gas stream discharging means. The raw synthesis gas stream **206** is introduced into the first cooling apparatus **208** through the raw synthesis gas stream introducing means for cooling. The cooled raw synthesis gas stream **210** is discharged from the first cooling apparatus **208** through the cooled raw synthesis gas stream discharging means. The cooled raw synthesis gas stream **210** is introduced into the CO conversion plant **212** through the cooled raw synthesis gas stream introducing means. The CO conversion plant **212** comprises at least one CO conversion stage (CO shift stage) for converting the cooled raw synthesis gas stream **210** introduced into the CO conversion plant **212** under CO conversion conditions to afford a converted synthesis gas stream **214.** The converted synthesis gas stream **214** which is enriched in hydrogen and carbon dioxide and depleted in carbon monoxide relative to the raw synthesis gas stream **206** is discharged from the CO conversion plant **212** through the converted synthesis gas stream discharging means. The converted synthesis gas stream **214** is introduced into the second cooling apparatus **216** through the converted synthesis gas stream introducing means for cooling. The cooled converted synthesis gas stream **218** is discharged from the second cooling apparatus **216** through the cooled converted synthesis gas stream discharging means. The cooled converted synthesis gas stream **218** is introduced into the carbon dioxide absorption column **220** through the cooled converted synthesis gas stream inlet. The carbon dioxide absorption column **220** operates according to the principle of a gas scrubbing, employing a physical or chemical scrubbing medium. The carbon dioxide absorption column **220** comprises at least one mass transfer zone, in a form of a structured packing and/or a random packing and/or a tray column, the cooled converted synthesis gas stream inlet, the first synthesis gas stream outlet at an upper end of the carbon dioxide absorption column **220,** the scrubbing medium stream outlet at a lower end of the carbon dioxide absorption column **220,** the fine scrubbing medium stream inlet in an upper region of the absorption column **220** and the main scrubbing medium stream inlet arranged in an upper region of the carbon dioxide absorption column **220** but below the inlet for the fine scrubbing medium stream **226.** The main scrubbing medium stream **230** is obtained by flash regeneration of at least a portion of the laden scrubbing medium stream **224** enriched in carbon dioxide in the flash regeneration unit **232** to obtain at least one flash gas stream (not shown) whose carbon dioxide concentration is higher than that in the first synthesis gas stream **222** depleted in carbon dioxide, and to obtain a partially regenerated scrubbing medium stream **225.** The fine scrubbing medium stream **226** is obtained by hot regeneration of at least a portion of the partially regenerated scrubbing medium stream **225** in the hot regeneration unit **228.** Further, the hot regeneration affords at least one hot generation offgas stream (not shown) whose carbon dioxide concentration is higher than that in the first synthesis gas stream **222** depleted in carbon dioxide. The cooled converted synthesis gas stream **218** in the carbon dioxide absorption column **220** is contacted with the main scrubbing medium stream **230** and with the fine scrubbing medium stream **226** and the first synthesis gas stream **222** depleted in carbon dioxide is discharged as a hydrogen-rich synthesis gas stream at the upper end of the carbon dioxide absorption column **220.** The hydrogen-rich synthesis gas stream **222** is optionally supplied to the at least one further purifying, conditioning or processing apparatus **236** through the hydrogen-rich synthesis gas stream supplying means and a purified, conditioned or processed hydrogen-rich synthesis gas stream **238** is discharged through the purified, conditioned or processed hydrogen-rich synthesis gas discharging means. According to an embodiment of the invention, the carbon dioxide absorption column **220** comprises the second synthesis gas stream outlet which is arranged below the inlet for the fine scrubbing medium stream **226** as a side draw and by means of which a second synthesis gas stream **240** depleted in carbon dioxide, whose carbon dioxide concentration is higher than that in the first synthesis gas stream **222,** is discharged. At least a portion of the second synthesis gas stream **240** depleted in carbon dioxide is utilized as a portion of a fuel gas or process gas or forms the fuel gas or process gas in the synthesis gas production stage **204** through the second synthesis gas stream outlet.

**FIG. 3** is a block diagram of a plant **300** for producing a hydrogen rich synthesis gas stream from a carbon-containing input gas stream having reduced carbon dioxide emission by utilizing at least a portion of a second synthesis gas stream depleted in carbon dioxide in addition with at least a portion of at least one flash gas stream as a portion of a fuel gas or process gas or forms the fuel gas or process gas in a synthesis gas production stage **304** according to an embodiment of the present disclosure. The plant **300** comprises a sulfur-free or desulfurized, carbon-containing input gas stream providing means, at least one synthesis gas production stage **304,** an input gas stream introducing means, a raw synthesis gas stream discharging means, a first cooling apparatus **308,** a raw synthesis gas stream introducing means, a cooled raw synthesis gas stream discharging means, a carbon monoxide (CO) conversion (CO shift) plant **312,** a cooled raw synthesis gas stream introducing means, a converted synthesis gas stream discharging means, a second cooling apparatus **316,** a converted synthesis gas stream introducing means, a cooled converted synthesis gas stream discharging means, a carbon dioxide absorption column **320,** a cooled converted synthesis gas stream inlet, a first synthesis gas stream outlet, a scrubbing medium stream outlet, a fine scrubbing medium stream inlet, a hot regeneration unit **328,** a main scrubbing medium stream inlet, a flash regeneration unit **332,** a purification, conditioning or processing apparatus **336,** a first synthesis gas stream supplying means, a purified, conditioned or processed hydrogen-rich synthesis gas stream discharging means, a second synthesis gas stream outlet, at least one flash gas stream outlet. The hydrogen-rich synthesis gas stream is produced by providing a sulfur-free or desulfurized, carbon-containing input gas stream **302.** The input gas stream **302,** preferably the sulfur-free or desulfurized input gas is introduced into the at least one synthesis gas production stage **304** through the input gas stream introducing means. The at least one synthesis gas production stage **304** is selected from a group comprising steam reforming stage, gas-heated reforming stage (GHR), autothermal reforming stage (ATR), catalytic partial oxidation stage (CPOX), noncatalytic partial oxidation stage (POX). The carbon-containing input gas stream **302** is introduced into the at least one synthesis gas production stage **304** through the input gas stream introducing means. The carbon-containing input gas stream **302** is converted into a raw synthesis gas stream **306** containing hydrogen, carbon monoxide (CO) and carbon dioxide (CO2) under synthesis gas production conditions in the at least one synthesis gas production stage **304.** The raw synthesis gas stream **306** is discharged from the at least one synthesis gas production stage **304** through the raw synthesis gas stream discharging means. The raw synthesis gas stream **306** is introduced into the first cooling apparatus **308** through the raw synthesis gas stream introducing means for cooling. The cooled raw synthesis gas stream **310** is discharged from the first cooling apparatus **308** through the cooled raw synthesis gas stream discharging means. The cooled raw synthesis gas stream **306** is introduced into the CO conversion plant **312** through the cooled raw synthesis gas stream introducing means. The CO conversion plant **312** comprises at least one CO conversion stage (CO shift stage) for converting the cooled raw synthesis gas stream **310** introduced into the CO conversion plant **312** under CO conversion conditions to afford a converted synthesis gas stream **314.** The converted synthesis gas stream **314** which is enriched in hydrogen and carbon dioxide and depleted in carbon monoxide relative to the raw synthesis gas stream **306** is discharged from the CO conversion plant **312** through the converted synthesis gas stream discharging means. The converted synthesis gas stream **314** is introduced into the second cooling apparatus **316** through the converted synthesis gas stream introducing means for cooling. The cooled converted synthesis gas stream **318** is discharged from the second cooling apparatus **316** through the cooled converted synthesis gas stream discharging means. The cooled converted synthesis gas stream **318** is introduced into the carbon dioxide absorption column **320** through the cooled converted synthesis gas stream inlet. The carbon dioxide absorption column **320** operates according to the principle of a gas scrubbing, employing a physical or chemical scrubbing medium. The carbon dioxide absorption column **320** comprises at least one mass transfer zone, in the form of a structured packing and/or a random packing and/or a tray column, the cooled converted synthesis gas stream inlet, the first synthesis gas stream outlet at the upper end of the absorption column **320,** the scrubbing medium stream outlet at the lower end of the absorption column **320,** the fine scrubbing medium stream inlet in the upper region of the absorption column **320** and the main scrubbing medium stream inlet arranged in the upper region of the carbon dioxide absorption column **320** but below the inlet for the fine scrubbing medium stream **326.** The main scrubbing medium stream **330** is obtained by flash regeneration of at least a portion of the laden scrubbing medium stream **324** enriched in carbon dioxide in the flash regeneration unit **332** to obtain at least one flash gas stream **334** whose carbon dioxide concentration is higher than that in the first synthesis gas stream **322** depleted in carbon dioxide, and to obtain a partially regenerated scrubbing medium stream **325.** The fine scrubbing medium stream **326** is obtained by hot regeneration of at least a portion of the partially regenerated scrubbing medium stream **325** in the hot regeneration unit **328.** Further, the hot regeneration affords at least one hot generation offgas stream (not shown) whose carbon dioxide concentration is higher than that in the first synthesis gas stream **322** depleted in carbon dioxide. The cooled converted synthesis gas stream **318** in the carbon dioxide absorption column **320** is contacted with the main scrubbing medium stream **330** and with the fine scrubbing medium stream **326** and the first synthesis gas stream **322** depleted in carbon dioxide is discharged as a hydrogen-rich synthesis gas stream at the upper end of the absorption column **320.** The hydrogen-rich synthesis gas stream **322** is optionally supplied to the at least one further purifying, conditioning or processing step in the purification, conditioning or processing apparatus **336** through the hydrogen-rich synthesis gas stream supplying means and a purified, conditioned or processed hydrogen-rich synthesis gas stream **338** is discharged through the purified, conditioned or processed hydrogen-rich synthesis gas stream discharging means. According to an embodiment of the invention, the carbon dioxide absorption column **320** comprises the second synthesis gas stream outlet which is arranged below the inlet for the fine scrubbing medium stream **326** as a side draw and by means of which the second synthesis gas stream **340** depleted in carbon dioxide, whose carbon dioxide concentration is higher than that in the first synthesis gas stream **322** depleted in carbon dioxide, is discharged. At least a portion of the second synthesis gas stream **340** depleted in carbon dioxide is utilized as a portion of a fuel gas or process gas or forms the fuel gas or process gas in a synthesis gas production stage **304** through the second synthesis gas stream outlet. In addition, at least a portion of the at least one flash gas stream **334 is** utilized as a portion of a fuel gas or process gas in the synthesis gas production stage **304** through the at least one flash gas stream outlet.

Modifications to embodiments of the invention described in the foregoing are possible without departing from the scope of the invention as defined by the accompanying claims.

### LIST OF REFERENCE NUMERALS

- 100, 200, 300: plant
- 102, 202, 302: carbon containing input gas stream
- 104, 204, 304: at least one synthesis gas production stage
- 106, 206, 306: raw synthesis gas stream
- 108, 208, 308: first cooling apparatus
- 110, 210, 310: cooled raw synthesis gas stream
- 112, 212, 312: CO conversion plant (CO shift plant)
- 114, 214, 314: converted synthesis gas stream
- 116, 216, 316: second cooling apparatus
- 118, 218, 318: cooled converted synthesis gas stream
- 120, 220, 320: carbon dioxide absorption column
- 122, 222, 322: first synthesis gas stream or hydrogen-rich synthesis gas stream
- 124, 236, 336: purifying, conditioning or processing apparatus or step
- 126, 238, 338: purified, conditioned or processed hydrogen-rich synthesis gas stream
- 224, 324: laden scrubbing medium stream
- 225, 325: partially regenerated scrubbing medium stream
- 226, 326: fine (lean) scrubbing medium stream
- 228, 328: hot regeneration unit
- 230, 330: main (semi-lean) scrubbing medium stream
- 232, 332: flash regeneration unit
- 334: at least one flash gas stream
- 240: second synthesis gas stream

## Claims

1. Process for producing a hydrogen-rich synthesis gas stream (222, 322) from a carbon-containing input gas stream (202, 302) having reduced carbon dioxide emission, comprising the steps of:
(a) providing a sulfur-free or desulfurized, carbon-containing input gas stream (202, 302);
(b) introducing the input gas stream (202, 302) into at least one synthesis gas production stage (204, 304) selected from a group comprising:
steam reforming stage, gas-heated reforming stage (GHR), autothermal reforming stage (ATR), catalytic partial oxidation stage (CPOX), noncatalytic partial oxidation stage (POX);
(c) converting the carbon-containing input gas stream (202, 302) introduced into the at least one synthesis gas production stage (204, 304) under synthesis gas production conditions and discharging a raw synthesis gas stream (206, 306) containing hydrogen, carbon monoxide (CO) and carbon dioxide (CO₂) from the at least one synthesis gas production stage (204, 304);
(d) introducing the raw synthesis gas stream (206, 306) into a first cooling apparatus (208, 308), cooling the raw synthesis gas stream (206, 306) in the first cooling apparatus (208, 308), discharging the cooled raw synthesis gas stream (210, 310) from the first cooling apparatus (208, 308);
(e) introducing the cooled raw synthesis gas stream (210, 310) into a CO conversion plant (212, 312) comprising at least one CO conversion stage, converting the cooled raw synthesis gas stream (210, 310) introduced into the CO conversion plant (212, 312) under CO conversion conditions to afford a converted synthesis gas stream (214, 314), discharging the converted synthesis gas stream (214, 314) which is enriched in hydrogen and carbon dioxide and depleted in carbon monoxide relative to the raw synthesis gas stream (206, 306);
(f) introducing the converted synthesis gas stream (214, 314) into a second cooling apparatus (216, 316), cooling the converted the synthesis gas stream (214, 314) in the second cooling apparatus (216, 316), discharging the cooled converted synthesis gas stream (218, 318) from the second cooling apparatus (216, 316);
(g) introducing the cooled converted synthesis gas stream (218, 318) into a carbon dioxide absorption column (220, 320) which operates according to the principle of a gas scrubbing having a physical or chemical scrubbing medium, wherein the carbon dioxide absorption column (220, 320) comprises:
(g1) at least one mass transfer zone, in the form of a structured packing and/or a random packing and/or a tray column,
(g2) an inlet for the cooled converted synthesis gas stream (218, 318),
(g3) an outlet for a first synthesis gas stream (222, 322) depleted in carbon dioxide at the upper end of the absorption column (220, 320),
(g4) an outlet for a scrubbing medium stream (224, 324) enriched in carbon dioxide at the lower end of the absorption column (220, 320),
(g5) an inlet for a fine scrubbing medium stream (226, 326) in the upper region of the absorption column (220, 320), wherein the fine scrubbing medium stream (226, 326) is obtained by hot regeneration (228, 328) of at least a portion of the scrubbing medium stream (224, 324) enriched in carbon dioxide,
(g6) an inlet for a main scrubbing medium stream (230, 330) arranged in the upper region of the absorption column (220, 320) but below the inlet for the fine scrubbing medium stream (226, 326), wherein the main scrubbing medium stream (230, 330) is obtained by flash regeneration (232, 332) of at least a portion of the scrubbing medium stream (224, 324) enriched in carbon dioxide to obtain least one flash gas stream (334) whose carbon dioxide concentration is higher than that in the first synthesis gas stream (222, 322) depleted in carbon dioxide;
(h) contacting the cooled converted synthesis gas stream (218, 318) in the carbon dioxide absorption column (220, 320) with the main scrubbing medium stream (230, 330) and with the fine scrubbing medium stream (226, 326), discharging the first synthesis gas stream (222, 322) depleted in carbon dioxide as a hydrogen-rich synthesis gas stream (222, 322) at the upper end of the absorption column (220, 320);
(i) optionally supplying the hydrogen-rich synthesis gas stream (222, 322) to at least one further purifying, conditioning or processing step (236, 336);
**characterized in that**
(j) the carbon dioxide absorption column (220, 320) comprises a further outlet which is arranged below the inlet for the fine scrubbing medium stream (226, 326) as a side draw and by means of which a second synthesis gas stream (240) depleted in carbon dioxide, whose carbon dioxide concentration is higher than that in the first synthesis gas stream (222, 322) depleted in carbon dioxide, is discharged;
(k) wherein at least a portion of the second synthesis gas stream (240) depleted in carbon dioxide is utilized as a portion of a fuel gas or process gas in the synthesis gas production stage or forms the fuel gas or process gas in the synthesis gas production stage.

2. Process according to Claim 1, **characterized in that** in addition to the at least a portion of the second synthesis gas stream (240) depleted in carbon dioxide at least a portion of the at least one flash gas stream (334) is also utilized as a portion of a fuel gas or process gas in the synthesis gas production stage or forms the fuel gas or process gas in the synthesis gas production stage.

3. Process according to claim 1 or 2, **characterized in that** the synthesis gas production stage (204, 304) is in the form of a steam reforming stage and comprises a multiplicity of reformer tubes filled with a solid, particulate reforming catalyst, wherein the reformer tubes are arranged in a reformer furnace whose interior is heated by burning a fuel gas with oxygen and/or air to form a flue gas using a multiplicity of burners, wherein the fuel gas comprises at least a portion of the second synthesis gas stream (240, 340) depleted in carbon dioxide.

4. Process according to Claim 1 or 2, **characterized in that** the synthesis gas production stage (204, 304) is in the form of an autothermal reforming stage (ATR), catalytic partial oxidation stage (CPOX) or noncatalytic partial oxidation stage (POX), wherein the input gas stream (202, 302) comprises at least a portion of the second synthesis gas stream (240, 340) depleted in carbon dioxide and/or the second synthesis gas stream (240, 340) depleted in carbon dioxide is at least partially used as fuel gas.

5. Process according to Claim 1 or 2, **characterized in that** the synthesis gas production stage (204, 304) is in the form of a combination of a steam reforming stage and an autothermal reforming stage (ATR), catalytic partial oxidation stage (CPOX) or noncatalytic partial oxidation stage (POX), wherein the input gas stream (202, 302) comprises a portion of the second synthesis gas stream (240, 340) depleted in carbon dioxide and/or the second synthesis gas stream (240, 340) depleted in carbon dioxide is at least partially used as fuel gas.

6. Process according to any of the preceding claims, **characterized in that** the entire second synthesis gas stream (240, 340) depleted in carbon dioxide or the entire second synthesis gas stream (240, 340) depleted in carbon dioxide and the entire at least one flash gas stream (334, 334) is utilized as a portion of a fuel gas or process gas in the synthesis gas production stage.

7. Process according to any of the preceding claims, **characterized in that** the scrubbing medium contains one or more components selected from the following group: methanol, N-methyl pyrrolidone (NMP), secondary amines, preferably diethanolamine, tertiary amines, preferably methyldiethanolamine, methyldiethanolamine with an activator, preferably methyldiethanolamine with piperazine, polyethylene glycol dialkyl ether, preferably polyethylene glycol dimethyl ether, ammonia solutions, preferably aqueous ammonia solutions.

8. Process according to any of the preceding claims, **characterized in that** the side draw is arranged at least one theoretical plate, preferably at least two theoretical plates, most preferably at least three theoretical plates below the outlet for the first synthesis gas stream (222, 322) depleted in carbon dioxide.

9. Process according to any of the preceding claims, **characterized in that** the side draw comprises a droplet separator.

10. Process according to any of the preceding claims, **characterized in that** the second synthesis gas stream (240, 340) depleted in carbon dioxide is passed through an expansion turbine for recovery of compression energy before it is utilized as a portion of a fuel gas or process gas or forms the fuel gas or process gas.

11. Process according to any of the preceding claims, **characterized in that** the side draw is arranged below the inlet for the main scrubbing medium stream (230, 330).

12. Process according to any of the preceding claims, **characterized in that** the carbon dioxide absorption column (220, 320) comprises two mass transfer zones arranged spaced apart on top of one another inside the carbon dioxide absorption column (220, 320), wherein the upper mass transfer zone serves the fine scrubbing and the lower mass transfer zone serves the main scrubbing,
wherein the inlet for the fine scrubbing medium stream (226, 326) is arranged above the upper mass transfer zone and the inlet for the main scrubbing medium stream (230, 330) is arranged between the two mass-transfer zones and
wherein the side draw for discharging the second synthesis gas stream (240, 340) depleted in carbon dioxide is arranged below the inlet for the fine scrubbing medium stream (226, 326) and above the inlet for the main scrubbing medium stream (230, 330).

13. Process according to any of Claims 1 to 11, **characterized in that** the carbon dioxide absorption column (220, 320) comprises three mass transfer zones arranged spaced apart on top of one another inside the carbon dioxide absorption column (220, 320), wherein the upper mass transfer zone serves the fine scrubbing and the middle and the lower mass transfer zone serve the main scrubbing,
wherein the inlet for the fine scrubbing medium stream (226, 326) is arranged above the upper mass transfer zone and the inlet for the main scrubbing medium stream (230, 330) is arranged above the middle mass transfer zone and
wherein the side draw for discharging the second synthesis gas stream (240, 340) depleted in carbon dioxide is arranged in the region of the mass transfer zones for the main scrubbing, preferably in an intermediate space between the middle and the lower mass transfer zone.

14. Process according to any of the preceding claims, **characterized in that** the carbon dioxide absorption column (220, 320) is divided into two sub-columns which are arranged on top of one another or preferably next to one another, wherein one sub-column comprises at least one mass transfer zone for the fine scrubbing and the other sub-column comprises at least one mass transfer zone for the main scrubbing.

15. Process according to any of the preceding claims, **characterized in that** the carbon dioxide concentration in the second synthesis gas stream (240, 340) depleted in carbon dioxide is between 0.5 and 15 mol%, preferably between 1 and 10 mol%, most preferably between 2 and 6 mol%.

16. Process according to any of the preceding claims, **characterized in that** the ratio of the molar flows of the second synthesis gas stream (240, 340) depleted in carbon dioxide to the first synthesis gas stream (222, 322) depleted in carbon dioxide is between 0.5% and 30%, preferably between 1% and 20%.

17. Process according to any of the preceding claims, **characterized in that** the ratio of the molar flows of the at least one flash gas stream (334) to the second synthesis gas stream (240, 340) depleted in carbon dioxide is between 10% and 200%, preferably between 20% and 100%.

18. Process according to any of the preceding claims, **characterized in that** the at least one further purifying, conditioning or processing step (236, 336) comprises a pressure swing adsorption apparatus (PSA) or a liquid nitrogen scrubbing (LNW) stage and/or a cryogenic condensation stage, wherein in each case at least one offgas stream is obtained and utilized as a portion of a fuel gas or process gas.

19. Process according to any of the preceding claims, **characterized in that** the carbon dioxide absorption column (220, 320) comprises a further mass transfer zone which is arranged above a mass transfer zone for the fine scrubbing and serves for backwashing of the scrubbing medium from the first synthesis gas stream (222, 322) depleted in carbon dioxide.

20. Plant (200, 300) for producing a hydrogen-rich synthesis gas stream (222, 322) from a carbon-containing input gas stream (202, 302) having reduced carbon dioxide emission, comprising the following assemblies and constituents fluidically connected to one another:
(a) means for providing a sulfur-free or desulfurized, carbon-containing input gas stream (202, 302);
(b) at least one synthesis gas production stage (204, 304) selected from a group comprising:
steam reforming stage, gas-heated reforming stage (GHR), autothermal reforming stage (ATR), catalytic partial oxidation stage (CPOX), noncatalytic partial oxidation stage (POX);
means for introducing the input gas stream (202, 302) into the at least one synthesis gas production stage (204, 304);
(c) means for discharging a raw synthesis gas stream (206, 306) containing hydrogen, carbon monoxide (CO) and carbon dioxide (CO₂) from the at least one synthesis gas production stage (204, 304);
(d) a first cooling apparatus (208, 308), means for discharging the raw synthesis gas stream (206, 306) into the first cooling apparatus (208, 308) means for discharging a cooled raw synthesis gas stream (210, 310) from the cooling apparatus (208, 308);
(e) a CO conversion plant (212, 312) comprising at least one CO conversion stage, means for introducing the cooled raw synthesis gas stream (210, 310) into the CO conversion plant (212, 312), means for discharging a converted synthesis gas stream (214, 314) which is enriched in hydrogen and carbon dioxide and depleted in carbon monoxide relative to the raw synthesis gas stream (206, 306);
(f) a second cooling apparatus (216, 316), means for introducing the converted synthesis gas stream (214, 314) into the second cooling apparatus (216, 316), means for discharging a cooled converted synthesis gas stream (218, 318) from the second cooling apparatus (216, 316);
(g) a carbon dioxide absorption column (220, 320) which operates according to the principle of a gas scrubbing having a physical or chemical scrubbing medium, wherein the carbon dioxide absorption column (220, 320) comprises:
(g1) at least one mass transfer zone in the form of a structured packing and/or a random packing and/or or a tray column,
(g2) an inlet for the cooled converted synthesis gas stream (218, 318),
(g3) an outlet for a first synthesis gas stream (222, 322) depleted in carbon dioxide at the upper end of the absorption column (220, 320),
(g4) an outlet for a scrubbing medium stream (224, 324) enriched in carbon dioxide at the lower end of the absorption column (220, 320),
(g5) an inlet for a fine scrubbing medium stream (226, 326) in the upper region of the absorption column (220, 320, 420), wherein the fine scrubbing medium stream (226, 326) is obtained by hot regeneration (228, 328) of at least a portion of the scrubbing medium stream (224, 324) enriched in carbon dioxide,
(g6) an inlet for a main scrubbing medium stream (230, 330) arranged in the upper region of the absorption column (220, 320) but below the inlet for the fine scrubbing medium stream (226, 326), wherein the main scrubbing medium stream (230, 330) is obtained by flash regeneration (232, 332) of at least a portion of the scrubbing medium stream (224, 324) enriched in carbon dioxide, wherein at least one flash gas stream (334) whose carbon dioxide concentration is higher than that in the first synthesis gas stream (222, 322) depleted in carbon dioxide is obtained, means for introducing the cooled converted synthesis gas stream (218, 318) into the carbon dioxide absorption column (220, 320);
(h) means for discharging the first synthesis gas stream (222, 322) depleted in carbon dioxide as a hydrogen-rich synthesis gas stream (222, 322) at the upper end of the absorption column (220, 320);
(i) optionally: means for supplying the hydrogen-rich synthesis gas stream (222, 322) to at least a further purification, conditioning or processing apparatus (236, 336);
**characterized in that**
(j) the carbon dioxide absorption column (220, 320) comprises a further outlet which is arranged below the inlet for the fine scrubbing medium stream (226, 326) as a side draw and by means of which a second synthesis gas stream (240, 340) depleted in carbon dioxide, whose carbon dioxide concentration is higher than that in the first synthesis gas stream (222, 322) depleted in carbon dioxide, may be discharged;
(k) wherein means which allow at least a portion of the second synthesis gas stream (240, 340) depleted in carbon dioxide to be utilized as a portion of a fuel gas or process gas in the synthesis gas production stage or to form the fuel gas or process gas in the synthesis gas production stage are comprised.

## Patentansprüche

1. Verfahren zum Herstellen eines wasserstoffreichen Synthesegasstroms (222, 322) aus einem Kohlenstoff enthaltenden Einsatzgasstrom (202, 302) mit reduzierter Kohlendioxid-Emission, umfassend folgende Schritte:
(a) Bereitstellen eines schwefelfreien oder entschwefelten, Kohlenstoff enthaltenden Einsatzgasstroms (202, 302);
(b) Einleiten des Einsatzgasstroms (202, 302) in mindestens eine Synthesegasherstellungsstufe (204, 304), ausgewählt aus einer Gruppe umfassend:
Dampfreformierungsstufe, gasbeheizte Reformierungsstufe (GHR), Autothermreformierungsstufe (ATR), katalytische Partialoxidationsstufe (CPOX), nichtkatalytische Partialoxidationsstufe (POX);
(c) Konvertieren des in die mindestens eine Synthesegasherstellungsstufe (204, 304) eingeleiteten Kohlenstoff enthaltenden Einsatzgasstroms (202, 302) unter Synthesegasherstellungsbedingungen und Ausleiten eines Wasserstoff, Kohlenmonoxid (CO) und Kohlendioxid (CO₂) enthaltenden Rohsynthesegasstroms (206, 306) aus der mindestens einen Synthesegasherstellungsstufe (204, 304);
(d) Einleiten des Rohsynthesegasstroms (206, 306) in eine erste Kühlvorrichtung (208, 308), Abkühlen des Rohsynthesegasstroms (206, 306) in der ersten Kühlvorrichtung (208, 308), Ausleiten des gekühlten Rohsynthesegasstroms (210, 310) aus der ersten Kühlvorrichtung (208, 308);
(e) Einleiten des abgekühlten Rohsynthesegasstroms (210, 310) in eine CO-Konvertierungsanlage (212, 312), die mindestens eine CO-Konvertierungsstufe umfasst, Konvertieren des in die CO-Konvertierungsanlage (212, 312) eingeleiteten abgekühlten Rohsynthesegasstroms (210, 310) unter CO-Konvertierungsbedingungen, zu einem konvertierten Synthesegasstrom (214, 314), Ausleiten des konvertierten Synthesegasstroms (214, 314) der gegenüber dem Rohsynthesegasstrom (206, 306) an Wasserstoff und Kohlendioxid angereichert und an Kohlenmonoxid abgereichert ist;
(f) Einleiten des konvertierten Synthesegasstroms (214, 314) in eine zweite Kühlvorrichtung (216, 316), Abühlen des konvertierten Synthesegasstroms (214, 314) in der zweiten Kühlvorrichtung (216, 316), Ausleiten des abgekühlten konvertierten Synthesegasstroms (218, 318) aus der zweiten Kühlvorrichtung (216, 316);
(g) Einleiten des abgekühlten konvertierten Synthesegasstroms (218, 318) in eine Kohlendioxid-Absorptionskolonne (220, 320), die nach dem Prinzip einer Gaswäsche mit einem physikalisch oder chemisch wirkenden Waschmedium arbeitet, wobei die Kohlendioxid-Absorptionskolonne (220, 320) Folgendes umfasst:
(g1) mindestens eine Stoffaustauschzone in Form einer strukturierten Packung und/oder einer Füllköperschüttung und/oder einer Bodenkolonne,
(g2) einen Einlass für den abgekühlten konvertierten Synthesegasstrom (218, 318),
(g3) einen Auslass für einen ersten an Kohlendioxid abgereicherten Synthesegasstrom (222, 322) am oberen Ende der Absorptionskolonne (220, 320),
(g4) einen Auslass für einen an Kohlendioxid angereicherten Waschmittelstrom (224, 324) am unteren Ende der Absorptionskolonne (220, 320),
(g5) einen Einlass für einen Feinwaschmittelstrom (226, 326) im oberen Bereich der Absorptionskolonne (220, 320), wobei der Feinwaschmittelstrom (226, 326) durch Heissregenerierung (228, 328) mindestens eines Teils des an Kohlendioxid angereicherten Waschmittelstroms (224, 324) erhalten wird,
(g6) einen Einlass für einen Hauptwaschmittelstrom (230, 330), angeordnet im oberen Bereich der Absorptionskolonne (220, 320), aber unterhalb des Einlasses für den Feinwaschmittelstrom (226, 326), wobei der Hauptwaschmittelstrom (230, 330) durch Flashrgenerierung (232, 332) mindestens eines Teils des an Kohlendioxid angereicherten Waschmittelstroms (224, 324) gewonnen wird, wobei mindestens ein Flashgasstrom (334) gewonnen wird, dessen Kohlendioxidkonzentration höher ist als diejenige in dem ersten an Kohlendioxid abgereicherten Synthesegasstrom (222, 322);
(h) Inkontaktbringen des abgekühlten konvertierten Synthesegasstroms (218, 318) in der Kohlendioxid-Absorptionskolonne (220, 320) mit dem Hauptwaschmittelstrom (230, 330) und mit dem Feinwaschmittelstrom (226, 326), Ausleiten des ersten an Kohlendioxid abgereicherten Synthesegasstroms (222, 322) als wasserstoffreichen Synthesegasstrom (222, 322) am oberen Ende der Absorptionskolonne (220, 320);
(i) gegebenenfalls Zuführen des wasserstoffreichen Synthesegasstroms (222, 322) zu mindestens einem weiteren Reinigungs-, Konditionierungs- oder Verarbeitungsschritt (236, 336);
**dadurch gekennzeichnet, dass**
(j) die Kohlendioxid-Absorptionskolonne (220, 320) einen weiteren Auslass umfasst, der als Seitenabzug unterhalb des Einlasses für den Feinwaschmittelstrom (226, 326) angeordnet ist und über den ein an Kohlendioxid abgereicherter zweiter Synthesegasstrom (240), dessen Kohlendioxidkonzentration höher ist als diejenige in dem ersten an Kohlendioxid abgereicherten Synthesegasstrom (222, 322), ausgeleitet wird;
(k) wobei mindestens ein Teil des an Kohlendioxid abgereicherten zweiten Synthesegasstroms (240) in der Synthesegasherstellungsstufe als ein Teil eines Brenngases oder Prozessgases genutzt wird oder in der Synthesegasherstellungsstufe das Brenngas oder Prozessgas bildet.

2. Verfahren nach Anspruch 1, **dadurch gekennzeichnet, dass** zusätzlich zu dem mindestens einen Teil des an Kohlendioxid abgereicherten zweiten Synthesegasstroms (240) auch mindestens ein Teil des mindestens einen Flashgasstroms (334) in der Synthesegasherstellungsstufe als Teil eines Brenngases oder Prozessgases genutzt wird oder in der Synthesegasherstellungsstufe das Brenngas oder Prozessgas bildet.

3. Verfahren nach Anspruch 1 oder 2, **dadurch gekennzeichnet, dass** die Synthesegasherstellungsstufe (204, 304) als Dampfreformierungsstufe ausgestaltet ist und eine Vielzahl von mit einem festen, partikelförmigen Reformierungskatalysator gefüllten Reformerrohren umfasst, wobei die Reformerrohre in einem Reformerofen angeordnet sind, dessen Innenraum mittels einer Vielzahl von Brennern durch Verbrennen eines Brenngases mit Sauerstoff und/oder Luft unter Bildung eines Rauchgases erhitzt wird, wobei das Brenngas mindestens einen Teil des zweiten an Kohlendioxid abgereicherten Synthesegasstroms (240, 340) umfasst.

4. Verfahren nach Anspruch 1 oder 2, **dadurch gekennzeichnet, dass** die Synthesegasherstellungsstufe (204, 304) als Autothermereformierungsstufe (ATR), katalytische Partialoxidationsstufe (CPOX) oder nichtkatalytische Partialoxidationsstufe (POX) ausgestaltet ist, wobei der Einsatzgasstrom (202, 302) mindestens einen Teil des zweiten an Kohlendioxid abgereicherten zweiten Synthesegasstroms (240, 340) umfasst und/oder der zweite an Kohlendioxid abgereicherte Synthesegasstrom (240, 340) mindestens teilweise als Brenngas verwendet wird.

5. Verfahren nach Anspruch 1 oder 2, **dadurch gekennzeichnet, dass** die Synthesegasherstellungsstufe (204, 304) als Kombination einer Dampfreformierungsstufe und einer Autothermreformierungsstufe (ATR), katalytischen Partialoxidationsstufe (CPOX) oder nichtkatalytischen Partialoxidationsstufe (POX) ausgestaltet ist, wobei der Einsatzgasstrom (202, 302) einen Teil des zweiten an Kohlendioxid abgereicherten Synthesegasstroms (240, 340) umfasst und/oder der zweite an Kohlendioxid abgereicherte Synthesegasstrom (240, 340) mindestens teilweise als Brenngas verwendet wird.

6. Verfahren nach einem der vorhergehenden Ansprüche, **dadurch gekennzeichnet, dass** der gesamte zweite an Kohlendioxid abgereicherte Synthesegasstrom (240, 340) oder der gesamte zweite an Kohlendioxid abgereicherte Synthesegasstrom (240, 340) und der gesamte mindestens eine Flashgasstrom (334, 334) in der Synthesegasherstellungsstufe als Teil eines Brenngases oder Prozessgases genutzt werden.

7. Verfahren nach einem der vorhergehenden Ansprüche, **dadurch gekennzeichnet, dass** das Waschmedium eine oder mehrere Komponenten enthält, die aus der folgenden Gruppe ausgewählt sind: Methanol, N-Methylpyrrolidon (NMP), sekundäre Amine, vorzugsweise Diethanolamin, tertiäre Amine, vorzugsweise Methyldiethanolamin, Methyldiethanolamin mit Aktivator, vorzugsweise Methyldiethanolamin mit Piperazin, Polyethylenglykoldialkylether, vorzugsweise Polyethylenglykoldimethylether, Ammoniaklösungen, vorzugsweise wässrige Ammoniaklösungen.

8. Verfahren nach einem der vorhergehenden Ansprüche, **dadurch gekennzeichnet, dass** der Seitenabzug um mindestens einen theoretischen Boden, bevorzugt um mindestens zwei theoretische Böden, ganz besonders bevorzugt um mindestens drei theoretische Böden, unterhalb des Auslasses für den ersten an Kohlendioxid abgereicherten Synthesegasstrom (222, 322) angeordnet ist.

9. Verfahren nach einem der vorhergehenden Ansprüche, **dadurch gekennzeichnet, dass** der Seitenabzug einen Tropfenabscheider umfasst.

10. Verfahren nach einem der vorhergehenden Ansprüche, **dadurch gekennzeichnet, dass** der zweite an Kohlendioxid abgereicherte Synthesegasstrom (240, 340) über eine Entspannungsturbine zur Rückgewinnung von Verdichtungsenergie geführt wird, bevor er als Teil eines Brenngases oder Prozessgases genutzt wird oder das Brenngas oder Prozessgas bildet.

11. Verfahren nach einem der vorhergehenden Ansprüche, **dadurch gekennzeichnet, dass** der Seitenabzug unterhalb des Einlasses für den Hauptwaschmittelstrom (230, 330) angeordnet ist.

12. Verfahren nach einem der vorhergehenden Ansprüche, **dadurch gekennzeichnet, dass** die Kohlendioxid-Absorptionskolonne (220, 320) zwei Stoffaustauschzonen umfasst, die übereinander im Inneren der Kohlendioxid-Absorptionskolonne (220, 320) beabstandet angeordnet sind, wobei die obere Stoffaustauschzone der Feinwäsche dient und die untere Stoffaustauschzone der Hauptwäsche dient,
wobei der Einlass für den Feinwaschmittelstrom (226, 326) oberhalb der oberen Stoffaustauschzone angeordnet ist und der Einlass für den Hauptwaschmittelstrom (230, 330) zwischen den beiden Stoffaustauschzonen angeordnet ist und
wobei der Seitenabzug zum Ausleiten des zweiten an Kohlendioxid abgereicherten Synthesegasstroms (240, 340) unterhalb des Einlasses für den Feinwaschmittelstrom (226, 326) und oberhalb des Einlasses für den Hauptwaschmittelstrom (230, 330) angeordnet ist.

13. Verfahren nach einem der Ansprüche 1 bis 11, **dadurch gekennzeichnet, dass** die Kohlendioxid-Absorptionskolonne (220, 320) drei Stoffaustauschzonen umfasst, die übereinander im Inneren der Kohlendioxid-Absorptionskolonne (220, 320) beabstandet angeordnet sind, wobei die obere Stoffaustauschzone der Feinwäsche dient und die mittlere und die untere Stoffaustauschzone der Hauptwäsche dienen,
wobei der Einlass für den Feinwaschmittelstrom (226, 326) oberhalb der oberen Stoffaustauschzone angeordnet ist und der Einlass für den Hauptwaschmittelstrom (230, 330) oberhalb der mittleren Stoffaustauschzone angeordnet ist und
wobei der Seitenabzug zum Ausleiten des zweiten an Kohlendioxid abgereicherten Synthesegasstroms (240, 340) im Bereich der Stoffaustauschzonen für die Hauptwäsche angeordnet ist, bevorzugt in einem Zwischenraum zwischen der mittleren und der unteren Stoffaustauschzone.

14. Verfahren nach einem der vorhergehenden Ansprüche, **dadurch gekennzeichnet, dass** die Kohlendioxid-Absorptionskolonne (220, 320) in zwei übereinander oder bevorzugt nebeneinander angeordnete Teilkolonnen aufgeteilt wird, wobei eine Teilkolonne mindestens eine Stoffaustauschzone für die Feinwäsche umfasst und die andere Teilkolonne mindestens eine Stoffaustauschzone für die Hauptwäsche umfasst.

15. Verfahren nach einem der vorhergehenden Ansprüche, **dadurch gekennzeichnet, dass** die Kohlendioxidkonzentration in dem zweiten an Kohlendioxid abgereicherten Synthesegasstrom (240, 340) zwischen 0,5 und 15 Mol-%, bevorzugt zwischen 1 und 10 Mol-%, ganz besonders bevorzugt zwischen 2 und 6 Mol-%, liegt.

16. Verfahren nach einem der vorhergehenden Ansprüche, **dadurch gekennzeichnet, dass** das Verhältnis der Stoffmengenströme des zweiten an Kohlendioxid abgereicherten Synthesegasstroms (240, 340) zu dem ersten an Kohlendioxid abgereicherten Synthesegasstrom (222, 322) zwischen 0,5 % und 30 %, bevorzugt zwischen 1 % und 20 %, liegt.

17. Verfahren nach einem der vorhergehenden Ansprüche, **dadurch gekennzeichnet, dass** das Verhältnis der Stoffmengenströme des mindestens einen Flashgasstroms (334) zu dem zweiten an Kohlendioxid abgereicherten Synthesegasstrom (240, 340) zwischen 10 % und 200 %, bevorzugt zwischen 20 % und 100 %, liegt.

18. Verfahren nach einem der vorhergehenden Ansprüche, **dadurch gekennzeichnet, dass** der mindestens eine weitere Reinigungs-, Konditionierungs- oder Verarbeitungsschritt (236, 336) eine Druckwechseladsorptionsvorrichtung (PSA) oder eine Flüssigstickstoffwäsche(LNW)-Stufe und/oder eine Tieftemperaturkondensationsstufe umfasst, wobei jeweils mindestens ein Abgasstrom erhalten und als Teil eines Brenngases oder Prozessgases genutzt wird.

19. Verfahren nach einem der vorhergehenden Ansprüche, **dadurch gekennzeichnet, dass** die Kohlendioxid-Absorptionskolonne (220, 320) eine weitere Stoffaustauschzone umfasst, die oberhalb einer Stoffaustauschzone für die Feinwäsche angeordnet ist und zur Rückwäsche des Waschmediums aus dem ersten an Kohlendioxid abgereicherten Synthesegasstrom (222, 322) dient.

20. Anlage (200, 300) zum Herstellen eines wasserstoffreichen Synthesegasstroms (222, 322) aus einem Kohlenstoff enthaltenden Einsatzgasstrom (202, 302) mit reduzierter Kohlendioxidemission, umfassend folgende, miteinander in Fluidverbindung stehende Baugruppen und Bestandteile:
(a) Mittel zum Bereitstellen eines schwefelfreien oder entschwefelten Kohlenstoff enthaltenden Einsatzgasstroms (202, 302);
(b) mindestens eine Synthesegasherstellungsstufe (204, 304), ausgewählt aus einer Gruppe umfassend:
Dampfreformierungsstufe, gasbeheizte Reformierungsstufe (GHR), Autothermreformierungsstufe (ATR), katalytische Partialoxidationsstufe (CPOX), nichtkatalytische Partialoxidationsstufe (POX);
Mittel zum Einleiten des Einsatzgasstroms (202, 302) in die mindestens eine Synthesegasherstellungsstufe (204, 304);
(c) Mittel zum Ausleiten eines Wasserstoff, Kohlenmonoxid (CO) und Kohlendioxid (CO₂) enthaltenden Rohsynthesegasstroms (206, 306) aus der mindestens einen Synthesegasherstellungsstufe (204, 304);
(d) eine erste Kühlvorrichtung (208, 308), Mittel zum Ausleiten des Rohsynthesegasstroms (206, 306) in die erste Kühlvorrichtung (208, 308), Mittel zum Ausleiten eines abgekühlten Rohsynthesegasstroms (210, 310) aus der Kühlvorrichtung (208, 308);
(e) eine CO-Konvertierungsanlage (212, 312), umfassend mindestens eine CO-Konvertierungsstufe, Mittel zum Einleiten des abgekühlten Rohsynthesegasstroms (210, 310) in die CO-Konvertierungsanlage (212, 312), Mittel zum Ausleiten eines konvertierten Synthesegasstroms (214, 314), der gegenüber dem Rohsynthesegasstrom (206, 306) an Wasserstoff und Kohlendioxid angereichert und an Kohlenmonoxid abgereichert ist;
(f) eine zweite Kühlvorrichtung (216, 316), Mittel zum Einleiten des konvertierten Synthesegasstroms (214, 314) in die zweite Kühlvorrichtung (216, 316), Mittel zum Ausleiten eines abgekühlten konvertierten Synthesegasstroms (218, 318) aus der zweiten Kühlvorrichtung (216, 316);
(g) eine Kohlendioxid-Absorptionskolonne (220, 320), die nach dem Prinzip einer Gaswäsche mit einem physikalisch oder chemisch wirkenden Waschmedium arbeitet, wobei die Kohlendioxid-Absorptionskolonne (220, 320) Folgendes umfasst:
(g1) mindestens eine Stoffaustauschzone in Form einer strukturierten Packung und/oder einer Füllköperschüttung und/oder einer Bodenkolonne,
(g2) einen Einlass für den abgekühlten konvertierten Synthesegasstrom (218, 318),
(g3) einen Auslass für einen ersten an Kohlendioxid abgereicherten Synthesegasstrom (222, 322) am oberen Ende der Absorptionskolonne (220, 320),
(g4) einen Auslass für einen an Kohlendioxid angereicherten Waschmittelstrom (224, 324) am unteren Ende der Absorptionskolonne (220, 320),
(g5) einen Einlass für einen Feinwaschmittelstrom (226, 326) im oberen Bereich der Absorptionskolonne (220, 320, 420), wobei der Feinwaschmittelstrom (226, 326) durch Heissregenerierung (228, 328) mindestens eines Teils des an Kohlendioxid angereicherten Waschmittelstroms (224, 324) erhalten wird,
(g6) einen Einlass für einen Hauptwaschmittelstrom (230, 330), angeordnet im oberen Bereich der Absorptionskolonne (220, 320), aber unterhalb des Einlasses für den Feinwaschmittelstrom (226, 326), wobei der Hauptwaschmittelstrom (230, 330) durch Flashrgenerierung (232, 332) mindestens eines Teils des an Kohlendioxid angereicherten Waschmittelstroms (224, 324) gewonnen wird, wobei mindestens ein Flashgasstrom (334) gewonnen wird, dessen Kohlendioxidkonzentration höher ist als diejenige in dem ersten an Kohlendioxid abgereicherten Synthesegasstrom (222, 322), Mittel zum Einleiten des abgekühlten konvertierten Synthesegasstroms (218, 318) in die Kohlendioxid-Absorptionskolonne (220, 320);
(h) Mittel zum Ausleiten des ersten an Kohlendioxid abgereicherten Synthesegasstroms (222, 322) als wasserstoffreichen Synthesegasstrom (222, 322) am oberen Ende der Absorptionskolonne (220, 320);
(i) optional: Mittel zum Zuführen des wasserstoffreichen Synthesegasstroms (222, 322) zu mindestens einer weiteren Reinigungs-, Konditionierungs- oder Verarbeitungsvorrichtung (236, 336);
**dadurch gekennzeichnet, dass**
(j) die Kohlendioxid-Absorptionskolonne (220, 320) einen weiteren Auslass umfasst, der als Seitenabzug unterhalb des Einlasses für den Feinwaschmittelstrom (226, 326) angeordnet ist und über den ein an Kohlendioxid abgereicherter zweiter Synthesegasstrom (240, 340), dessen Kohlendioxidkonzentration höher ist als diejenige in dem ersten an Kohlendioxid abgereicherten Synthesegasstrom (222, 322), ausgeleitet werden kann;
(k) wobei Mittel enthalten sind, die es ermöglichen, dass mindestens ein Teil des zweiten an Kohlendioxid abgereicherten Synthesegasstroms (240, 340) als ein Teil eines Brenngases oder Prozessgases in der Synthesegasherstellungsstufe genutzt wird oder in der Synthesegasherstellungsstufe das Brenngas oder Prozessgas bildet.

## Revendications

1. Procédé pour la production d'un flux de gaz de synthèse riche en hydrogène (222, 322) à partir d'un flux de gaz d'entrée contenant du carbone (202, 302) ayant des émissions de dioxyde de carbone réduites, comprenant les étapes consistant à :
(a) fournir un flux de gaz d'entrée contenant du carbone sans soufre ou désulfuré (202, 302) ;
(b) introduire le flux de gaz d'entrée (202, 302) dans au moins un étage de production de gaz de synthèse (204, 304) choisi dans un groupe comprenant :
un étage de reformage à la vapeur, un étage de reformage chauffé au gaz (GHR), un étage de reformage autothermique (ATR), un étage d'oxydation partielle catalytique (CPOX), un étage d'oxydation partielle non catalytique (POX) ;
(c) convertir le flux de gaz d'entrée contenant du carbone (202, 302) introduit dans l'au moins un étage de production de gaz de synthèse (204, 304) dans des conditions de production de gaz de synthèse et évacuer un flux de gaz de synthèse brut (206, 306) contenant de l'hydrogène, du monoxyde de carbone (CO) et du dioxyde de carbone (CO₂) de l'au moins un étage de production de gaz de synthèse (204, 304) ;
(d) introduire le flux de gaz de synthèse brut (206, 306) dans un premier appareil de refroidissement (208, 308), refroidir le flux de gaz de synthèse brut (206, 306) dans le premier appareil de refroidissement (208, 308), évacuer le flux de gaz de synthèse brut refroidi (210, 310) du premier appareil de refroidissement (208, 308) ;
(e) introduire le flux de gaz de synthèse brut refroidi (210, 310) dans une installation de conversion de CO (212, 312) comprenant au moins un étage de conversion de CO, convertir le flux de gaz de synthèse brut refroidi (210, 310) introduit dans l'installation de conversion de CO (212, 312) dans des conditions de conversion de CO pour procurer un flux de gaz de synthèse converti (214, 314), évacuer le flux de gaz de synthèse converti (214, 314) qui est enrichi en hydrogène et en dioxyde de carbone et appauvri en monoxyde de carbone par rapport au flux de gaz de synthèse brut (206, 306) ;
(f) introduire le flux de gaz de synthèse converti (214, 314) dans un second appareil de refroidissement (216, 316), refroidir le flux de gaz de synthèse converti (214, 314) dans le second appareil de refroidissement (216, 316), évacuer le flux de gaz de synthèse converti refroidi (218, 318) du second appareil de refroidissement (216, 316) ;
(g) introduire le flux de gaz de synthèse converti refroidi (218, 318) dans une colonne d'absorption de dioxyde de carbone (220, 320) qui fonctionne selon le principe d'un lavage de gaz avec un fluide de lavage physique ou chimique, la colonne d'absorption de dioxyde de carbone (220, 320) comprenant :
(g1) au moins une zone de transfert de masse, sous la forme d'un garnissage structuré et/ou d'un garnissage en vrac et/ou d'une colonne à plateaux,
(g2) une entrée pour le flux de gaz de synthèse converti refroidi (218, 318),
(g3) une sortie pour un premier flux de gaz de synthèse (222, 322) appauvri en dioxyde de carbone à l'extrémité supérieure de la colonne d'absorption (220, 320),
(g4) une sortie pour un flux de fluide de lavage (224, 324) enrichi en dioxyde de carbone à l'extrémité inférieure de la colonne d'absorption (220, 320),
(g5) une entrée pour un flux de fluide de lavage fin (226, 326) dans la région supérieure de la colonne d'absorption (220, 320), le flux de fluide de lavage fin (226, 326) étant obtenu par régénération à chaud (228, 328) d'au moins une partie du flux de fluide de lavage (224, 324) enrichi en dioxyde de carbone,
(g6) une entrée pour un flux de fluide de lavage principal (230, 330) disposée dans la région supérieure de la colonne d'absorption (220, 320) mais au-dessous de l'entrée pour le flux de fluide de lavage fin (226, 326), le flux de fluide de lavage principal (230, 330) étant obtenu par régénération par vaporisation instantanée (232, 332) d'au moins une partie du flux de fluide de lavage (224, 324) enrichi en dioxyde de carbone pour obtenir au moins un flux de gaz de vaporisation instantanée (334) dont la concentration en dioxyde de carbone est plus élevée que celle dans le premier flux de gaz de synthèse (222, 322) appauvri en dioxyde de carbone ;
(h) mettre en contact le flux de gaz de synthèse converti refroidi (218, 318) dans la colonne d'absorption de dioxyde de carbone (220, 320) avec le flux de fluide de lavage principal (230, 330) et avec le flux de fluide de lavage fin (226, 326), évacuer le premier flux de gaz de synthèse (222, 322) appauvri en dioxyde de carbone en tant que flux de gaz de synthèse riche en hydrogène (222, 322) à l'extrémité supérieure de la colonne d'absorption (220, 320) ;
(i) éventuellement envoyer le flux de gaz de synthèse riche en hydrogène (222, 322) vers au moins une étape de purification, de conditionnement ou de traitement (236, 336) supplémentaire ;
**caractérisé en ce que**
(j) la colonne d'absorption de dioxyde de carbone (220, 320) comprend une sortie supplémentaire qui est disposée au-dessous de l'entrée pour le flux de fluide de lavage fin (226, 326) en tant que soutirage latéral et au moyen de laquelle est évacué un second flux de gaz de synthèse (240) appauvri en dioxyde de carbone, dont la concentration en dioxyde de carbone est plus élevée que celle dans le premier flux de gaz de synthèse (222, 322) appauvri en dioxyde de carbone ;
(k) au moins une partie du second flux de gaz de synthèse (240) appauvri en dioxyde de carbone étant utilisée en tant que partie d'un gaz combustible ou d'un gaz de procédé dans l'étage de production de gaz de synthèse ou formant le gaz combustible ou le gaz de procédé dans l'étage de production de gaz de synthèse.

2. Procédé selon la revendication 1, **caractérisé en ce qu'**en plus de l'au moins une partie du second flux de gaz de synthèse (240) appauvri en dioxyde de carbone, au moins une partie de l'au moins un flux de gaz de vaporisation instantanée (334) est également utilisée en tant que partie d'un gaz combustible ou d'un gaz de procédé dans l'étage de production de gaz de synthèse ou forme le gaz combustible ou le gaz de procédé dans l'étage de production de gaz de synthèse.

3. Procédé selon la revendication 1 ou 2, **caractérisé en ce que** l'étage de production de gaz de synthèse (204, 304) est sous la forme d'un étage de reformage à la vapeur et comprend une multiplicité de tubes de reformeur remplis d'un catalyseur de reformage solide particulaire, les tubes du reformeur étant disposés dans un four de reformeur dont l'intérieur est chauffé par le fait de brûler un gaz combustible avec de l'oxygène et/ou de l'air pour former un gaz de carneau à l'aide d'une multiplicité de brûleurs, le gaz combustible comprenant au moins une partie du second flux de gaz de synthèse (240, 340) appauvri en dioxyde de carbone.

4. Procédé selon la revendication 1 ou 2, **caractérisé en ce que** l'étage de production de gaz de synthèse (204, 304) est sous la forme d'un étage de reformage autothermique (ATR), d'un étage d'oxydation partielle catalytique (CPOX) ou d'un étage d'oxydation partielle non catalytique (POX), le flux de gaz d'entrée (202, 302) comprenant au moins une partie du second flux de gaz de synthèse (240, 340) appauvri en dioxyde de carbone et/ou le second flux de gaz de synthèse (240, 340) appauvri en dioxyde de carbone étant au moins partiellement utilisé en tant que gaz combustible.

5. Procédé selon la revendication 1 ou 2, **caractérisé en ce que** l'étage de production de gaz de synthèse (204, 304) est sous la forme d'une combinaison d'un étage de reformage à la vapeur et d'un étage de reformage autothermique (ATR), d'un étage d'oxydation partielle catalytique (CPOX) ou d'un étage d'oxydation partielle non catalytique (POX), le flux de gaz d'entrée (202, 302) comprenant une partie du second flux de gaz de synthèse (240, 340) appauvri en dioxyde de carbone et/ou le second flux de gaz de synthèse (240, 340) appauvri en dioxyde de carbone étant au moins partiellement utilisé en tant que gaz combustible.

6. Procédé selon l'une quelconque des revendications précédentes, **caractérisé en ce que** la totalité du second flux de gaz de synthèse (240, 340) appauvri en dioxyde de carbone ou la totalité du second flux de gaz de synthèse (240, 340) appauvri en dioxyde de carbone et la totalité de l'au moins un flux de gaz de vaporisation instantanée (334, 334) sont utilisées en tant que partie d'un gaz combustible ou d'un gaz de procédé dans l'étage de production de gaz de synthèse.

7. Procédé selon l'une quelconque des revendications précédentes, **caractérisé en ce que** le fluide de lavage contient un ou plusieurs composants choisis dans le groupe suivant : le méthanol, la N-méthylpyrrolidone (NMP), les amines secondaires, de préférence la diéthanolamine, les amines tertiaires, de préférence la méthyldiéthanolamine, la méthyldiéthanolamine avec un activateur, de préférence la méthyldiéthanolamine avec la pipérazine, un éther dialkylique de polyéthylèneglycol, de préférence l'éther diméthylique de polyéthylèneglycol, les solutions d'ammoniac, de préférence les solutions aqueuses d'ammoniac.

8. Procédé selon l'une quelconque des revendications précédentes, **caractérisé en ce que** le soutirage latéral est disposé au moins un plateau théorique, de préférence au moins deux plateaux théoriques, le plus préférablement au moins trois plateaux théoriques au-dessous de la sortie pour le premier flux de gaz de synthèse (222, 322) appauvri en dioxyde de carbone.

9. Procédé selon l'une quelconque des revendications précédentes, **caractérisé en ce que** le soutirage latéral comprend un dévésiculeur.

10. Procédé selon l'une quelconque des revendications précédentes, **caractérisé en ce que** le second flux de gaz de synthèse (240, 340) appauvri en dioxyde de carbone est amené à passer dans une turbine de détente pour la récupération d'énergie de compression avant d'être utilisé en tant que partie d'un gaz combustible ou d'un gaz de procédé ou de former le gaz combustible ou le gaz de procédé.

11. Procédé selon l'une quelconque des revendications précédentes, **caractérisé en ce que** le soutirage latéral est disposé au-dessous de l'entrée pour le flux de fluide de lavage principal (230, 330).

12. Procédé selon l'une quelconque des revendications précédentes, **caractérisé en ce que** la colonne d'absorption de dioxyde de carbone (220, 320) comprend deux zones de transfert de masse disposées à distance l'une sur l'autre à l'intérieur de la colonne d'absorption de dioxyde de carbone (220, 320), la zone de transfert de masse supérieure servant au lavage fin et la zone de transfert de masse inférieure servant au lavage principal,
l'entrée pour le flux de fluide de lavage fin (226, 326) étant disposée au-dessus de la zone de transfert de masse supérieure et l'entrée pour le flux de fluide de lavage principal (230, 330) étant disposée entre les deux zones de transfert de masse et
le soutirage latéral pour l'évacuation du second flux de gaz de synthèse (240, 340) appauvri en dioxyde de carbone étant disposé au-dessous de l'entrée pour le flux de fluide de lavage fin (226, 326) et au-dessus de l'entrée pour le flux de fluide de lavage principal (230, 330).

13. Procédé selon l'une quelconque des revendications 1 à 11, **caractérisé en ce que** la colonne d'absorption de dioxyde de carbone (220, 320) comprend trois zones de transfert de masse disposées à distance les unes sur les autres à l'intérieur de la colonne d'absorption de dioxyde de carbone (220, 320), la zone de transfert de masse supérieure servant au lavage fin et les zones de transfert de masse centrale et inférieure servant au lavage principal,
l'entrée pour le flux de fluide de lavage fin (226, 326) étant disposée au-dessus de la zone de transfert de masse supérieure et l'entrée pour le flux de fluide de lavage principal (230, 330) étant disposée au-dessus de la zone de transfert de masse centrale et
le soutirage latéral pour l'évacuation du second flux de gaz de synthèse (240, 340) appauvri en dioxyde de carbone étant disposé dans la région des zones de transfert de masse pour le lavage principal, de préférence dans un espace intermédiaire entre les zones de transfert de masse centrale et inférieure.

14. Procédé selon l'une quelconque des revendications précédentes, **caractérisé en ce que** la colonne d'absorption de dioxyde de carbone (220, 320) est divisée en deux sous-colonnes qui sont disposées l'une sur l'autre ou de préférence l'une à côté de l'autre, une sous-colonne comprenant au moins une zone de transfert de masse pour le lavage fin et l'autre sous-colonne comprenant au moins une zone de transfert de masse pour le lavage principal.

15. Procédé selon l'une quelconque des revendications précédentes, **caractérisé en ce que** la concentration en dioxyde de carbone dans le second flux de gaz de synthèse (240, 340) appauvri en dioxyde de carbone est comprise entre 0,5 et 15 % en moles, de préférence entre 1 et 10 % en moles, le plus préférablement entre 2 et 6 % en moles.

16. Procédé selon l'une quelconque des revendications précédentes, **caractérisé en ce que** le rapport du débit molaire du second flux de gaz de synthèse (240, 340) appauvri en dioxyde de carbone au débit molaire du premier flux de gaz de synthèse (222, 322) appauvri en dioxyde de carbone est compris entre 0,5 % et 30 %, de préférence entre 1 % et 20 %.

17. Procédé selon l'une quelconque des revendications précédentes, **caractérisé en ce que** le rapport du débit molaire de l'au moins un flux de gaz de vaporisation instantanée (334) au débit molaire du second flux de gaz de synthèse (240, 340) appauvri en dioxyde de carbone est compris entre 10 % et 200 %, de préférence entre 20 % et 100 %.

18. Procédé selon l'une quelconque des revendications précédentes, **caractérisé en ce que** l'au moins une étape de purification, de conditionnement ou de traitement (236, 336) supplémentaire comprend un appareil d'adsorption modulée en pression (PSA) ou un étage de lavage à l'azote liquide (LNW) et/ou un étage de condensation cryogénique, au moins un flux de gaz effluent étant dans chaque cas obtenu et utilisé en tant que partie d'un gaz combustible ou d'un gaz de procédé.

19. Procédé selon l'une quelconque des revendications précédentes, **caractérisé en ce que** la colonne d'absorption de dioxyde de carbone (220, 320) comprend une zone de transfert de masse supplémentaire qui est disposée au-dessus d'une zone de transfert de masse pour le lavage fin et qui sert au lavage à contre-courant du fluide de lavage provenant du premier flux de gaz de synthèse (222, 322) appauvri en dioxyde de carbone.

20. Installation (200, 300) pour la production d'un flux de gaz de synthèse riche en hydrogène (222, 322) à partir d'un flux de gaz d'entrée contenant du carbone (202, 302) ayant des émissions de dioxyde de carbone réduites, comprenant les ensembles et constituants suivants en communication fluidique les uns avec les autres :
(a) un moyen pour la fourniture d'un flux de gaz d'entrée contenant du carbone sans soufre ou désulfuré (202, 302) ;
(b) au moins un étage de production de gaz de synthèse (204, 304) choisi dans un groupe comprenant : un étage de reformage à la vapeur, un étage de reformage chauffé au gaz (GHR), un étage de reformage autothermique (ATR), un étage d'oxydation partielle catalytique (CPOX), un étage d'oxydation partielle non catalytique (POX) ;
un moyen pour l'introduction du flux de gaz d'entrée (202, 302) dans l'au moins un étage de production de gaz de synthèse (204, 304) ;
(c) un moyen pour l'évacuation d'un flux de gaz de synthèse brut (206, 306) contenant de l'hydrogène, du monoxyde de carbone (CO) et du dioxyde de carbone (CO₂) de l'au moins un étage de production de gaz de synthèse (204, 304) ;
(d) un premier appareil de refroidissement (208, 308), un moyen pour l'évacuation du flux de gaz de synthèse brut (206, 306) dans le premier appareil de refroidissement (208, 308), un moyen pour l'évacuation d'un flux de gaz de synthèse brut refroidi (210, 310) de l'appareil de refroidissement (208, 308) ;
(e) une installation de conversion de CO (212, 312) comprenant au moins un étage de conversion de CO, un moyen pour l'introduction du flux de gaz de synthèse brut refroidi (210, 310) dans l'installation de conversion de CO (212, 312), un moyen pour l'évacuation d'un flux de gaz de synthèse converti (214, 314) qui est enrichi en hydrogène et en dioxyde de carbone et appauvri en monoxyde de carbone par rapport au flux de gaz de synthèse brut (206, 306) ;
(f) un second appareil de refroidissement (216, 316), un moyen pour l'introduction du flux de gaz de synthèse converti (214, 314) dans le second appareil de refroidissement (216, 316), un moyen pour l'évacuation d'un flux de gaz de synthèse converti refroidi (218, 318) du second appareil de refroidissement (216, 316) ;
(g) une colonne d'absorption de dioxyde de carbone (220, 320) qui fonctionne selon le principe d'un lavage de gaz avec un fluide de lavage physique ou chimique, la colonne d'absorption de dioxyde de carbone (220, 320) comprenant :
(g1) au moins une zone de transfert de masse sous la forme d'un garnissage structuré et/ou d'un garnissage en vrac et/ou d'une colonne à plateaux,
(g2) une entrée pour le flux de gaz de synthèse converti refroidi (218, 318),
(g3) une sortie pour un premier flux de gaz de synthèse (222, 322) appauvri en dioxyde de carbone à l'extrémité supérieure de la colonne d'absorption (220, 320),
(g4) une sortie pour un flux de fluide de lavage (224, 324) enrichi en dioxyde de carbone à l'extrémité inférieure de la colonne d'absorption (220, 320),
(g5) une entrée pour un flux de fluide de lavage fin (226, 326) dans la région supérieure de la colonne d'absorption (220, 320, 420), le flux de fluide de lavage fin (226, 326) étant obtenu par régénération à chaud (228, 328) d'au moins une partie du flux de fluide de lavage (224, 324) enrichi en dioxyde de carbone,
(g6) une entrée pour un flux de fluide de lavage principal (230, 330) disposée dans la région supérieure de la colonne d'absorption (220, 320) mais au-dessous de l'entrée pour le flux de fluide de lavage fin (226, 326), le flux de fluide de lavage principal (230, 330) étant obtenu par régénération par vaporisation instantanée (232, 332) d'au moins une partie du flux de fluide de lavage (224, 324) enrichi en dioxyde de carbone, au moins un flux de gaz de vaporisation instantanée (334) dont la concentration en dioxyde de carbone est plus élevée que celle dans le premier flux de gaz de synthèse (222, 322) appauvri en dioxyde de carbone étant obtenu, un moyen pour l'introduction du flux de gaz de synthèse converti refroidi (218, 318) dans la colonne d'absorption de dioxyde de carbone (220, 320) ;
(h) un moyen pour l'évacuation du premier flux de gaz de synthèse (222, 322) appauvri en dioxyde de carbone en tant que flux de gaz de synthèse riche en hydrogène (222, 322) à l'extrémité supérieure de la colonne d'absorption (220, 320) ;
(i) éventuellement : un moyen pour l'envoi du flux de gaz de synthèse riche en hydrogène (222, 322) vers au moins un appareil de purification, de conditionnement ou de traitement (236, 336) supplémentaire ;
**caractérisé en ce que**
(j) la colonne d'absorption de dioxyde de carbone (220, 320) comprend une sortie supplémentaire qui est disposée au-dessous de l'entrée pour le flux de fluide de lavage fin (226, 326) en tant que soutirage latéral et au moyen de laquelle un second flux de gaz de synthèse (240, 340) appauvri en dioxyde de carbone, dont la concentration en dioxyde de carbone est plus élevée que celle dans le premier flux de gaz de synthèse (222, 322) appauvri en dioxyde de carbone, peut être évacué ;
(k) un moyen qui permet d'utiliser au moins une partie du second flux de gaz de synthèse (240, 340) appauvri en dioxyde de carbone en tant que partie d'un gaz combustible ou d'un gaz de procédé dans l'étage de production de gaz de synthèse ou pour former le gaz combustible ou le gaz de procédé dans l'étage de production de gaz de synthèse étant compris.
